(19) Europäisches Patentamt
European Patent Office
Office européen des brevets

(11) **EP 2 800 230 B1**

(12) **EUROPEAN PATENT SPECIFICATION**

(45) Date of publication and mention
of the grant of the patent:
**20.06.2018 Bulletin 2018/25**

(51) Int Cl.:
*H02J 7/02* (2016.01)     *H02M 3/00* (2006.01)
*G05F 1/26* (2006.01)     *H02J 9/06* (2006.01)

(21) Application number: **12861714.9**

(22) Date of filing: **24.10.2012**

(86) International application number:
**PCT/CN2012/083440**

(87) International publication number:
**WO 2013/097526 (04.07.2013 Gazette 2013/27)**

(54) **DC/DC CIRCUIT FOR UNINTERRUPTIBLE POWER SUPPLY**

DC/DC-SCHALTUNG FÜR UNTERBRECHUNGSFREIE STROMVERSORGUNG

CIRCUIT CONTINU-CONTINU POUR ALIMENTATION ÉLECTRIQUE ININTERRUPTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2011 CN 201110448727
29.09.2012 CN 201210374995**

(43) Date of publication of application:
**05.11.2014 Bulletin 2014/45**

(73) Proprietor: **Vertiv Tech Co., Ltd.
Guangdong 518055 (CN)**

(72) Inventors:
• **NI, Tong
Shenzhen
Guangdong 518057 (CN)**
• **SONG, Miao
Shenzhen
Guangdong 518057 (CN)**
• **LIU, Feng
Shenzhen
Guangdong 518057 (CN)**
• **LIU, Chunyang
Shenzhen
Guangdong 518057 (CN)**

(74) Representative: **Noble, Nicholas et al
Kilburn & Strode LLP
Lacon London
84 Theobalds Road
London WC1X 8NL (GB)**

(56) References cited:
CN-A- 101 388 560     CN-A- 101 710 716
CN-U- 201 742 107     CN-U- 201 918 762
CN-U- 201 918 762     CN-U- 201 928 040
CN-Y- 2 893 944     CN-Y- 201 281 825
CN-Y- 201 393 183     US-A- 4 916 329
US-A- 5 602 462     US-A- 5 978 236
US-A1- 2008 062 724

**Description**

**Field of the Invention**

The present invention relates to the field of uninterruptible power supplies and in particular to a DC/DC circuit for an uninterruptible power supply.

**Background of the Invention**

In a conventional Uninterruptible Power Supply (UPS), there are generally the following two designs for a charger of the UPS:

Firstly in an isolated design, generally backward conversion and sometimes also dual forward conversion or the like is adopted; and

Secondly in a non-isolated design, stepping-down conversion by a BUCK circuit, stepping-up and -down conversion by a BUCK-BOOST circuit or the like is adopted.

Both the design ideas for the charger of the conventional UPS have the charger arranged separately so that in the UPS, the charger is a separate component of the UPS regardless of how the charger is attached to UPS.

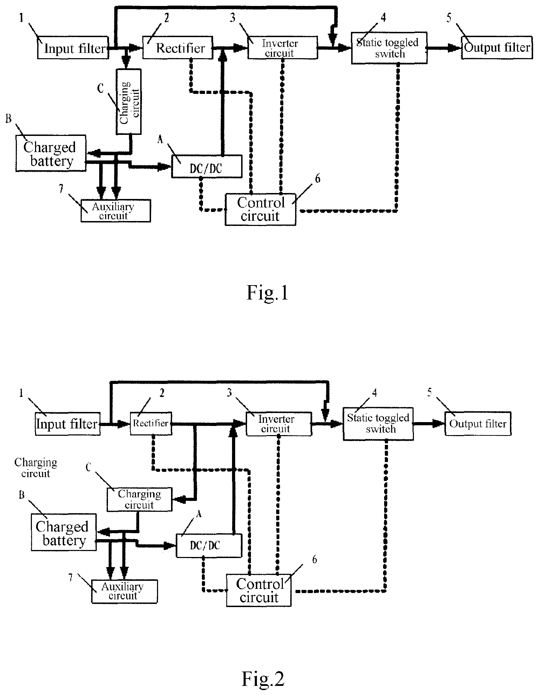

As illustrated in Fig.1, there is a first system block diagram of a traditional UPS. The UPS includes an input filter circuit 1, a rectifier circuit 2, an inverter circuit 3, a static toggled switch 4, an output filter circuit 5, a control circuit 6, an auxiliary circuit 7, a DC/DC circuit A, a charged battery B and a charging circuit C, where the input filter circuit 1, the rectifier circuit 2, the inverter circuit 3, the static toggled switch 4 and the output filter circuit 5 are connected sequentially, and an output of the input filter circuit 1 is connected with an input of the static toggled switch 4. The charging circuit C is connected between the charged battery B and the output of the input filter circuit 1, and the DC/DC circuit A is connected between the charged battery B and an output of the rectifier circuit 2. All the DC/DC circuit A, the rectifier circuit 2, the inverter circuit 3 and the static toggled switch 4 are controlled by the control circuit 6. Also the charged battery B powers the auxiliary circuit 7. In the UPS, the charged battery B is charged in a mains supply mode, that is, the charged battery B is charged by the mains sequentially through the input filter circuit 1 and the charging circuit C, and the charged battery B is discharged in a battery supply mode, that is, the charged battery B provides the inverter circuit 3 with an input voltage through the DC/DC circuit A.

As illustrated in Fig.2, there is a second system block diagram of a traditional UPS. The second system block diagram is different from the first system block diagram illustrated in Fig.1 in the charging circuit C connected between the charged battery B and the output of the rectifier circuit 2. Alike the charged battery B is charged in the mains supply mode, that is, the charged battery B is charged by the mains sequentially through the input filter circuit 1, the rectifier circuit 2 and the charging circuit C, and the charged battery B is discharged in the battery supply mode, that is, the charged battery B provides the inverter circuit 3 with an input voltage through the DC/DC circuit A.

Apparently in the traditional UPS, the charger has to charge the charged battery B using the separate charging circuit C, thus making the circuitry complex and costly.

Fig.1 and Fig.2 illustrating the general structure of the Uninterruptible Power Supply (UPS), the structure includes two DC/DC circuits which are the charger circuit and the battery discharger circuit respectively. In the existing UPS design, the charger and the battery discharger are designed separately.

The charger is generally designed as isolated and non-isolated, either of which is determined by a coupling pattern of its topology. For the isolated charger, a backward converter is generally adopted in a small-power section, but a dual forward form is also adopted by some manufactures. A general idea of the design for the charger is to have the charger operate separately as a separate component in the hardware system of the UPS.

As illustrated in Fig.1 and Fig.2, in the design idea of the conventional charger, the charger is a separate component of the system regardless of how the charger is attached (coupled), thus making the uninterruptible power supply costly.

Thus there is a technical problem to be addressed by those skilled in the art as to how to provide a DC/DC circuit for an uninterruptible power supply so as to make the UPS system more simplified and less voluminous while lowering the cost of the system.

US 2008/0062724 A1, which is considered as the closest prior art, discloses a bidirectional active power conditioner including a DC side, a bidirectional DC/DC power converter, a DC/AC inverter and an AC side.

**Summary of the Invention**

A technical problem to be addressed by this application is to provide a DC/DC circuit for an uninterruptible power supply so as to make the UPS system more simplified and less voluminous while lowering the cost of the system.

In one aspect, as set forth in claim 1, a DC/DC circuit for an uninterruptible power supply, wherein the DC/DC circuit for an uninterruptible power supply is a bidirectional DC/DC circuit connected between a bus and a battery; and in a mains mode, the bidirectional DC/DC circuit draws power from the bus and charges the battery; and when the mains becomes abnormal, the bidirectional DC/DC circuit draws from the battery and powers the bus, wherein the bidirectional DC/DC circuit comprises an isolated transformer, and a primary side of the isolated transformer is connected with a push-pull circuit or a half-bridge circuit or a full-bridge circuit; and a secondary of the isolated transformer is connected with a push-pull circuit or a half-bridge circuit or a full-bridge circuit; the isolated transformer is provided with multiple controllable taps; and the bidirectional DC/DC circuit has the ratio of turns switched by selecting a controllable tap of the primary side and/or the secondary side of the isolated transformer; and an anode of the battery is connected with a second tap, that is a central tap, of the primary side of the isolated transformer, a cathode of the battery is connected through a filter inductor to a first rectifier unit, and is connected respectively with a second terminal of a first transistor and a second terminal of a second transistor through a first relay, a first terminal of the first transistor and a first terminal of the second transistor are connected respectively with a first tap, that is a dotted terminal, and a third tap, that is an undotted terminal, of the primary side of the isolated transformer, so that only the isolated transformer is used for both charging and discharging modes of the battery, and that a first chopper unit, comprising the first transistor and the second transistor, used in the discharging mode is completely independent from the first rectifier unit used in the charging mode.

According to a first aspect of this application, this application provides a DC/DC circuit for an uninterruptible power supply, wherein the DC/DC circuit for an uninterruptible power supply is a bidirectional DC/DC circuit connected with a battery and a bus;

in a mains mode, the bidirectional DC/DC circuit draws power from the bus and charges the battery; and when the mains becomes abnormal, the bidirectional DC/DC circuit operates in a state where the battery powers the bus; the bidirectional DC/DC circuit includes an isolated transformer, and a primary side of the isolated transformer is connected with a push-pull circuit or a half-bridge circuit or a full-bridge circuit; and a secondary of the isolated transformer is connected

with a push-pull circuit or a half-bridge circuit or a full-bridge circuit; and the isolated transformer is provided with multiple controllable taps; and the bidirectional DC/DC circuit has the ratio of turns switched by selecting a controllable tap of the primary side and/or the secondary side of the isolated transformer.

Preferably the secondary side of the isolated transformer is connected with a rectifier circuit and both terminals of the rectifier circuit are connected concurrently in parallel with first and second transistors and with a capacitor.

Preferably the controllable taps are two gated taps of the secondary side of the isolated transformer; the first gated tap is connected with the rectifier circuit or a common terminal of the first and second transistors; and the second gated gap is connected with or the common terminal of the first and second transistors or the rectifier circuit.

Preferably the first and second transistors are a half-bridge structure; and one terminal of the first transistor is connected with a positive terminal of a positive bus, one terminal of the second transistor is connected with a negative bus, the first transistor is connected with one terminal of the second transistor, and a first gated switch is arranged between the common terminal of the first transistor and the second transistor and a dotted terminal of a first tap of the secondary side of the isolated transformer, that is the first gated tap; and a second gated switch is arranged between a dotted terminal of a second tap of the secondary side of the isolated transformer, that is the second gated tap, and the rectifier circuit.

Preferably the controllable taps are first and second switched taps of the secondary side of the isolated transformer; a first toggled switch is arranged between a common terminal of the first transistor and the second transistor and a dotted terminal of the secondary side of the isolated transformer, that is, the first switched tap and the second switched tap; and the first toggled switch is configured to switch the first switched tap or the second switched tap to be closed.

Preferably a first inductor is arranged between the first switched tap and the first toggled switch.

Preferably a third filtering inductor and a third switch are added at the battery side, and when the battery is discharged, the third switch is closed to have the third filtering inductor shorted-circuit, and the battery powers the bus through a discharger; and when the battery is charged, the third switch is opened, and the filtering inductor plays a role of filtering.

Preferably a filtering inductor and a switch are added between a dotted terminal of a fixed tap of the secondary side of the isolated transformer and a common terminal of the two capacitors.

Preferably the controllable taps are two sets of switched taps of the secondary side of the isolated transformer; the first set of switched taps includes a first switched tap and a second switched tap; a first toggled switch SWITCH1 is arranged between the first switched tap, the second switched tap and the second transistor Q2; and the first switched tap or the second switched tap is selected and enabled by the first toggled switch; the second set of switched taps includes a third switched tap and a fourth switched tap; a second toggled switch SWITCH1 is arranged between the third switched tap, the fourth switched tap and the first transistor Q1; and the third switched tap or the fourth switched tap is selected and enabled by the second toggled switch;

the bus side is a full-wave rectifier circuit, and the ratios of turns of the transformer in charging and discharging are changed by switching the ratios of turns through the first and second toggled switches; and

a first inductor and a third switch connected in parallel across the first inductor are arranged between a dotted terminal of a fixed tap of the secondary side of the isolated transformer and the capacitor.

Preferably the first inductor is arranged between the first switched tap of the secondary side of the isolated transformer and the second transistor, and a second inductor is arranged between a fourth switched tap of the secondary side of the isolated transformer and the first switch.

Preferably the push-pull circuit or the half-bridge circuit or the full-bridge circuit connected at the primary side of the isolated transformer is embodied as an MOS transistor, and an equivalent diode of the MOS transistor acts as an equivalent rectifier diode of the secondary side when the bidirectional DC/DC circuit draws power from the bus to charge the battery.

According to a second aspect of this application, there is provided a DC/DC circuit for an uninterruptible power supply, wherein the DC/DC circuit for an uninterruptible power supply is a bidirectional DC/DC circuit connected between a bus and a battery; and

in a mains mode, the bidirectional DC/DC circuit draws power from the bus and charges the battery; and when the mains becomes abnormal, the bidirectional DC/DC circuit draws from the battery and powers the bus.

Preferably the bidirectional DC/DC circuit includes:

an isolated transformer;

a first selector unit, a first chopper unit and a first rectifier unit arranged at a primary side of the isolated transformer; and

a second selector unit, a second chopper unit and a second rectifier unit arranged at a secondary side of the isolated transformer; and

in the mains mode, the second selector unit selects the second chopper unit for operation, and the first selector unit selects the first rectifier unit for operation; and when the mains becomes abnormal, the first selector unit selects the first chopper unit for operation, and the second selector unit selects the second rectifier unit for operation.

Preferably there are multiple controllable taps at the primary side and/or the secondary side of the isolated transformer, and the first chopper unit and the first rectifier unit are connected respectively with different controllable taps at the primary side of the isolated transformer and/or the second chopper unit and the second rectifier unit are connected respectively with different controllable taps at the secondary side of the isolated transformer.

Preferably the first chopper unit and the second chopper unit are a push-pull chopper unit, a full-bridge chopper unit or a half-bridge chopper unit.

Preferably the first rectifier unit and the second rectifier unit is a full-bridge rectifier unit, a full-wave rectifier unit, a voltage-doubling rectifier unit or a current-doubling rectifier unit.

Preferably the first selector unit and the second selector unit are a relay and/or a solid-state switch.

Preferably when the first selector unit and the second selector unit are a relay, the relay includes at least one single-pole single-throw relay, single-pole double-throw relay or double-pole double-throw relay.

Preferably the bidirectional DC/DC circuit further includes a current mutual inductor or a Hall sensor arranged at the primary side and/or the secondary side of the isolated transformer to sample current of the primary side and/or the secondary side of the isolated transformer.

Preferably the bidirectional DC/DC circuit further includes a filtering inductor arranged at the primary side and/or the secondary side of the isolated transformer.

Preferably the first selector unit includes a single-pole single-throw first relay, the second selector unit includes a single-pole double-throw second relay, the first chopper unit includes a first transistor and a second transistor, the second chopper unit include a third transistor and a fourth transistor, the first rectifier unit includes a first diode and a second diode, and the second chopper unit includes a third diode and a fourth diode, and the bidirectional DC/DC circuit further includes a first filtering inductor arranged at the primary side of the isolated transformer, a second filter inductor arranged at the secondary side of the isolated transformer, and a current mutual inductor arranged at the primary side of the isolated transformer, and

an anode of the battery is connected with a second tap, that is a central tap, of the primary side of the isolated transformer, a cathode of the battery is connected respectively with a second terminal of the first transistor and a second terminal of the second transistor through the first relay, a first terminal of the first transistor and a first terminal of the second transistor are connected respectively with a first tap, that is a dotted terminal, and a third tap, that is an undotted terminal, of the

EP 2 800 230 B1

primary side of the isolated transformer, the first tap and the third tap of the primary side of the isolated transformer are further connected respectively with a cathode of the first diode and a cathode of the second diode through the current mutual inductor, and an anode of the first diode and an anode of the second diode together are connected with the cathode of the battery through the first filter inductor; and a third tap, that is a central tap, of the secondary side of the isolated transformer is connected with a positive bus, a first tap and a fifth tap of the secondary side of the isolated transformer are connected respectively with a cathode of the third diode and a cathode of the fourth diode, an anode of the third diode and an anode of the fourth diode together are connected with a first selector tap of the second relay through the second filtering inductor, a second tap and a fourth tap of the secondary side of the isolated transformer are connected respectively with a first terminal of the third transistor and a first terminal of the fourth transistor, a second terminal of the third transistor and a second terminal of the fourth transistor together are connected with a second selector tap of the second relay, and a moving tap of the second relay is connected with a negative bus.

Preferably the first selector unit includes a single-pole single-throw first relay and third relay, the second selector unit includes a single-pole double-throw second relay, the first chopper unit includes a first transistor and a second transistor, the second chopper unit include a third transistor and a fourth transistor, the first rectifier unit includes a first diode and a second diode, and the second rectifier unit includes a third diode and a fourth diode, and the bidirectional DC/DC circuit further includes a first filtering inductor arranged at the primary side of the isolated transformer, a second filter inductor arranged at the secondary side of the isolated transformer, and a current mutual inductor arranged at the primary side of the isolated transformer, and

an anode of the battery is connected with a second tap, that is a central tap, of the primary side of the isolated transformer, a cathode of the battery is connected respectively with a second terminal of the first transistor and a second terminal of the second transistor, a first terminal of the first transistor is connected with a first tap, that is a dotted terminal, of the primary side of the isolated transformer through the first relay, a first terminal of the second transistor is connected with a third tap, that is an undotted terminal, of the primary side of the isolated transformer through the third relay, the first tap and the third tap of the primary side of the isolated transformer are further connected respectively with a cathode of the first diode and a cathode of the second diode through the current mutual inductor, and an anode of the first diode and an anode of the second diode together are connected with the cathode of the battery through the first filter inductor; and a third tap, that is a central tap, of the secondary side of the isolated transformer is connected with a positive bus, a first tap and a fifth tap of the secondary side of the isolated transformer are connected respectively with a cathode of the third diode and a cathode of the fourth diode, an anode of the third diode and an anode of the fourth diode together are connected with a first selector tap of the second relay through the second filtering inductor, a second tap and a fourth tap of the secondary side of the isolated transformer are connected respectively with a first terminal of the third transistor and a first terminal of the fourth transistor, a second terminal of the third transistor and a second terminal of the fourth transistor together are connected with a second selector tap of the second relay, and a moving tap of the second relay is connected with a negative bus.

According to a third aspect of this application, there is a UPS including the DC/DC circuit according to claims 12-22.

This application has the following advantages over the prior art:

Since in the UPS power control circuit according to this application, the bidirectional DC/DC circuit is connected between the output of the rectifier circuit and the charged battery, and the control circuit is connected with the bidirectional DC/DC circuit and controlled by the control circuit; and in the battery supply mode, the mains charges the charged battery sequentially through the input filter circuit, the rectifier circuit and the bidirectional DC/DC circuit; and in the mains supply mode, the charged battery provides the inverter circuit with an input voltage through the bidirectional DC/DC circuit. The bidirectional DC/DC circuit is integrated with both charging and discharging functions, so the charged battery does not need any separate charging circuit to charge itself to thereby make the entire circuitry of the UPS control circuit simpler and less costly and bring a higher value to a customer.

On the other hand, in an existing isolated transformer without any controllable tap, the voltage ratio of non-backward-like (push-pull, full-bridge and half-bridge circuit) primary and secondary sides is approximately to the ratio of turns of primary and secondary sides of the transformer. In the UPS, the battery needs to be discharged in the battery mode for a period of time in which the lower voltage of the discharged battery shall maintain the voltage of a bus. In the mains mode, the battery needs to be charged so that both average and floating charged voltage of the battery are above the lowest voltage input to the battery, and at this time the voltage of the bus is required to be raised to charge the battery. The factor by which the voltage of the bus is raised is equal to the square of the ratio the highest charging voltage of the battery to the lowest discharging voltage of the battery, divided by the square of a duty ratio (see Formula below).

$$\frac{V\_BUS\_CHG}{V\_BUS\_BAT} = \frac{V\_BAT\_H}{D\_max * D_{\_max} * V\_BAT\_L}$$

$$= \frac{n1 * n1}{D_{\_max} * D\_max}$$

Note: the lowest discharging voltage of the battery is V_BAT_L; the highest charging voltage of the battery is V_BAT_H; the voltage of the bus in the mains mode, i.e., the charging mode, is V_BUS_CHG; the voltage of the bus in the battery mode is V_BUS_BAT; the highest duty ratio of the bidirectional DC/DC circuit is D_max; and n1 is the ratio the highest charging voltage of the battery to the lowest discharging voltage of the battery.

Thus with a specific duty ratio D_max, if the lower voltage of the battery is enabled to energize the bus and to have the battery charged by the bus in the mains mode, then the voltage of the bus in the mains mode shall be raised.

In the isolated transformer with multiple controllable taps according to this application, the types of the inverter circuit (the switch device and the bus capacitor) can be selected consistently in the mains mode and the charging mode, and the voltage of the bus will not be raised, that is, a higher-level bus capacitor will not be selected, in the battery charging mode.

Thus with the selected types of the inverter circuit (the switch device and the bus capacitor) maintained, there is a wider battery discharging range for the isolated transformer with multiple controllable taps according to this application.

In summary, the isolated transformer is provided with multiple controllable taps; the bidirectional DC/DC circuit can have the ratio of turns switched by selecting a controllable tap of the primary side or the secondary side of the isolated transformer, and better use of the transformer with the bidirectional DC/DC circuit can be made to thereby achieve wider battery discharging voltages, extend the battery discharging range of the UPS and improve the discharging period of time for the UPS in the battery mode.

**Brief Description of the Drawings**

Fig. 1 is a first system block diagram of a conventional UPS;

Fig.2 is a second system block diagram of a conventional UPS;

Fig.3 is a system block diagram of a first embodiment of a UPS according to this application;

Fig.4 is a circuit diagram of a first embodiment of the bidirectional DC/DC circuit according to this application;

Fig.5 is a circuit diagram of a second embodiment of the bidirectional DC/DC circuit according to this application;

Fig.6 is a circuit diagram of a third embodiment of the bidirectional DC/DC circuit according to this application;

Fig.7 is a circuit diagram of a fourth embodiment of the bidirectional DC/DC circuit according to this application;

Fig.8 is a circuit diagram of a fifth embodiment of the bidirectional DC/DC circuit according to this application;

Fig.9 is a circuit diagram of a sixth embodiment of the bidirectional DC/DC circuit according to this application;

Fig.10 is a circuit diagram of a seventh embodiment of the bidirectional DC/DC circuit according to this application;

Fig.11 is a circuit diagram of a eighth embodiment of the bidirectional DC/DC circuit according to this application;

Fig.12 is a circuit diagram of a ninth embodiment of the bidirectional DC/DC circuit according to this application;

Fig.13 is a circuit diagram of a tenth embodiment of the bidirectional DC/DC circuit according to this application;

Fig.14 is a circuit diagram of a eleventh embodiment of the bidirectional DC/DC circuit according to this application;

Fig.15 is a circuit diagram of a twelfth embodiment of the bidirectional DC/DC circuit according to this application;

Fig.16 is a logic diagram of a further embodiment of a UPS according to this application;

Fig.17 is a circuit diagram of a thirteenth embodiment of the bidirectional DC/DC circuit according to this application;

Fig.18 is a circuit diagram of a fourteenth embodiment of the bidirectional DC/DC circuit according to this application;

Fig.19 is a circuit diagram of a fifth embodiment of the bidirectional DC/DC circuit according to this application;

Fig.20 is a circuit diagram of a sixteenth embodiment of the bidirectional DC/DC circuit according to this application;

Fig.21 is a circuit diagram of a seventeenth embodiment of the bidirectional DC/DC circuit according to this application;

Fig.22 is a circuit diagram of a eighteenth embodiment of the bidirectional DC/DC circuit according to this application; and

Fig.23 is a circuit diagram of a nineteenth embodiment of the bidirectional DC/DC circuit according to this application.

**Detailed Description of the Invention**

This application provides a DC/DC circuit for an uninterruptible power supply so as to make the UPS system more simplified while lowering the cost of the system.

In order to make the foregoing objects, features and advantages of this application more apparent, particular embodiments of this application will be described below in details with reference to the drawings.

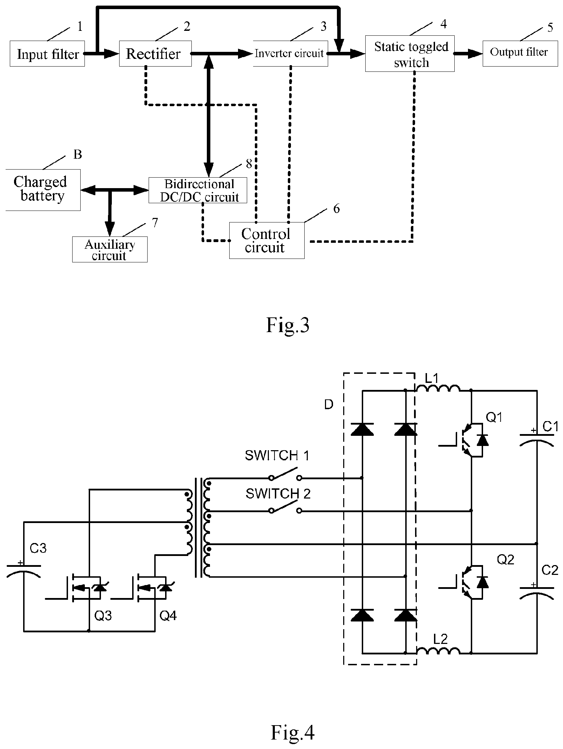

As illustrated in Fig.3, there is a system block diagram of a first embodiment of a UPS according to this application.

The UPS according to the embodiment of this application includes a charged battery B and a UPS control circuit connected therewith. The UPS control circuit includes an input filter circuit 1, a rectifier circuit 2, an inverter circuit 3, a static toggled switch 4, an output filter circuit 5, a control circuit 6 and a bidirectional DC/DC circuit 8.

The input filter circuit 1, the rectifier circuit 2, the inverter circuit 3, the static toggled switch 4 and the output filter circuit 5 are connected sequentially, and an output of the input filter circuit 1 is connected with an input of the static toggled switch 4. All the rectifier circuit 2, the inverter circuit 3, the static toggled switch 4 and the bidirectional DC/DC circuit 8 are connected with the control circuit 6 and controlled by the control circuit 6.

The bidirectional DC/DC circuit 8 is connected between an output of the rectifier circuit 2 and the charged battery B. In a battery supply mode, the charged battery B provides the inverter circuit 3 with an input voltage through the bidirectional DC/DC circuit 8; and in a mains supply mode, an output voltage of the rectifier circuit 2 charges the charged battery B through the bidirectional DC/DC circuit 8.

Since in the UPS power control circuit according to this application, the bidirectional DC/DC circuit 8 is connected between the output of the rectifier circuit 2 and the charged battery B, and the control circuit is connected with the bidirectional DC/DC circuit 8 and controlled by the control circuit 6; and in the battery supply mode, the mains charges the charged battery B sequentially through the input filter circuit 1, the rectifier circuit 2 and the bidirectional DC/DC circuit 8; and in the mains supply mode, the charged battery B provides the inverter circuit 3 with an input voltage through the bidirectional DC/DC circuit 8. The bidirectional DC/DC circuit 8 is integrated with both charging and discharging functions, so the charged battery B does not need any separate charging circuit to charge itself to thereby make the entire circuitry of the UPS control circuit simpler and less costly and bring a higher value to a customer.

In an existing isolated transformer without any controllable tap, the voltage ratio of non-backward-like (push-pull, full-bridge and half-bridge circuit) primary and secondary sides is approximately to the ratio of turns of primary and secondary sides of the transformer. In the UPS, the battery needs to be discharged in the battery mode for a period of time in which the lower voltage of the discharged battery shall maintain the voltage of a bus. In the mains mode, the battery needs to be charged so that both average and floating charged voltage of the battery are above the lowest voltage input to the battery, and at this time the voltage of the bus is required to be raised to charge the battery. The factor by which the voltage of the bus is raised is equal to the square of the ratio the highest charging voltage of the battery to the lowest discharging voltage of the battery, divided by the square of a duty ratio (see Formula below).

$$\frac{V\_BUS\_CHG}{V\_BUS\_BAT} = \frac{V\_BAT\_H}{D\_max * D_{\_max} * V\_BAT\_L}$$
$$= \frac{n1 * n1}{D_{\_max} * D\_max}$$

Note: the lowest discharging voltage of the battery is V_BAT_L; the highest charging voltage of the battery is V_BAT_H; the voltage of the bus in the mains mode, i.e., the charging mode, is V_BUS_CHG; the voltage of the bus in the battery mode is V_BUS_BAT; and the highest duty ratio of the bidirectional DC/DC circuit is D_max.

$$n1 = \frac{V\_BAT\_H}{V\_BAT\_L}$$

Note: n1 is the ratio the highest charging voltage of the battery to the lowest discharging voltage of the battery.

Thus with a specific duty ratio D_max, if the lower voltage of the battery is enabled to energize the bus and to have the battery charged by the bus in the mains mode, then the voltage of the bus in the mains mode shall be raised.

For example, with the duty ratio of 0.9 and the ratio of the charging voltage to the lowest discharging voltage of the battery is 1.4, then the voltage of the bus in the mains mode is required to be 1.4*1.4/0.9*0.9 times the voltage of the bus in the battery mode, and such a high voltage range may render it difficult to select a bus capacitor and a transistor and also increase the cost of the system.

This factor has to be lowered at the cost of a discharging voltage range of the battery, for example, by modifying the ratio of the highest to lowest voltages to 1.1, and at this time, the voltage of the bus in the mains mode is 1.49 time the voltage of the bus in the battery mode.

However with the ratio of the highest to lowest voltages being 1.1, the battery will be discharged in the battery mode for a lowered period of time, and with the same discharging period of time configured, the capacity of the battery will be significantly improved.

In the isolated transformer with multiple controllable taps according to this application, the types of the inverter circuit (the switch device and the bus capacitor) can be selected consistently in the mains mode and the charging mode, and the voltage of the bus will not be raised, that is, a higher-level bus capacitor will not be selected, in the battery charging mode.

Thus with the selected types of the inverter circuit (the switch device and the bus capacitor) maintained, there is a wider battery discharging range for the isolated transformer with multiple controllable taps according to this application.

In summary, the isolated transformer is provided with multiple controllable taps; the bidirectional DC/DC circuit can have the ratio of turns switched by selecting a controllable tap of the primary side or the secondary side of the isolated transformer, and better use of the transformer with the bidirectional DC/DC circuit can be made to thereby achieve wider battery discharging voltages, extend the battery discharging range of the UPS and improve the discharging period of time for the UPS in the battery mode.

A controllable tap can be enabled (gated or switched) by a control signal. A corresponding tap can be particularly referred to as a gated tap when it is enabled by being gated. A corresponding tap can be particularly referred to as a switched tap when it is enabled by being switched.

The UPS according to the embodiment of the invention can further include an auxiliary circuit 7 arranged between the bidirectional DC/DC circuit 8 and the charged circuit B.

Referring to Fig.4, there is a circuit diagram of a first embodiment of the bidirectional DC/DC circuit according to this application.

The DC/DC circuit for an uninterruptible power supply according to this application is applicable to an uninterruptible power supply, and the DC/DC circuit for an uninterruptible power supply is a bidirectional DC/DC circuit connected with a battery and a bus.

In a mains mode, the bidirectional DC/DC circuit draws power from the bus to charge the battery; and when the mains becomes abnormal, the bidirectional DC/DC circuit operates in a state where the battery powers the bus.

The bidirectional DC/DC circuit includes an isolated transformer, and the isolated transformer has a primary side connected with a push-pull circuit or a half-bridge circuit or a full-bridge circuit, and a secondary side of the isolated transformer can be any of various conventional circuit structures including a half-bridge circuit or a full-bridge circuit or a push-pull circuit.

The isolated transformer is provided with multiple controllable taps; and the bidirectional DC/DC circuit has the ratio of turns switched by selecting a tap of the primary side or the secondary side of the isolated transformer to adjust charging and discharging voltages.

Referring to Fig.4, the secondary side of the isolated transformer is particularly connected with a rectifier circuit, both ends of which are connected concurrently in parallel with first and second transistors Q1 and Q2 and with capacitors C1 and C2.

The isolated transformer according to the first embodiment illustrated in Fig.4 includes two gated taps which control lines corresponding to the two gated taps to be switched on or off dependent upon whether gated switches SWITCH1 and SWITCH2 are closed or opened.

For a gated tap, a line of the corresponding tap is switched on or off by controlling a gated switch to be closed or opened.

In a first preferred embodiment of the bidirectional DC/DC circuit according to the invention, the rectifier circuit 2 at the battery side includes a third transistor Q3 and a fourth transistor Q4, and a half-wave rectifier circuit constituting of a body diode of the third transistor Q3 and a body diode of the fourth transistor Q4.

An anode of the charged battery B (not illustrated in Fig.4) can be connected with a central tap of the primary side of the isolated transformer through a battery/mains selector switch; and a cathode of the charged battery B is connected with a dotted terminal of the primary side of the isolated transformer 101 through the third transistor Q3, and the cathode of the charged battery B is connected with an undotted terminal of the primary side of the isolated transformer 101 through the fourth transistor Q4. The third capacitor C4 is connected between the central tap of the primary side of the isolated transformer and the cathode of the charged battery B.

Furthermore (not illustrated in Fig.4), a diode is arranged between the central tap of the primary side of the isolated transformer and the anode of the charged battery B, and the diode has an anode connected with the central tap of the primary side of the isolated transformer and a cathode connected with the anode of the charged battery B. With the mains supply mode selected by the battery/mains selector switch, the battery/mains selector switch is opened, and charging current charges the charged battery B through the diode to thereby prevent rippling from affecting the charged battery B.

The first and second transistors are a half-bridge structure; and one terminal of the first transistor Q1 is connected with a positive terminal of a positive bus, one terminal of the second transistor Q2 is connected with a negative bus, and the first transistor Q1 is connected with one terminal of the second transistor Q2.

A dotted terminal of the secondary side of the isolated transformer (a first gated tap) is connected with a positive input I+ of rectified current (a rectifier bridge D) (not illustrated in Fig.4) through the first gated switch SWITCH1, an un-dotted terminal of the secondary side of the isolated transformer (a fixed terminal)) is connected with a negative input I- of the rectifier bridge D (not illustrated in Fig.4), a positive output O+ of the rectifier bridge D (not illustrated in Fig.4) is connected with a negative output O-of the rectifier bridge D (not illustrated in Fig.4) sequentially through the first transistor Q1 and the second transistor Q2, a node between the first transistor Q1 and the second transistor Q2 is connected with a second gated tap of the secondary side of the isolated transformer 101 (a dotted terminal) through the second switch SWITCH2, the positive output O+ of the rectifier bridge D is connected with the negative output O- of the rectifier bridge D sequentially through the first capacitor C1 and the second capacitor C2, and a node between the first capacitor C1 and the second capacitor C2 is connected with a fixed tap, a dotted terminal, of the secondary side of the isolated transformer 101.

When the battery/mains selector switch is closed, the battery supply mode is enabled, and when the battery/mains selector switch is opened, the mains supply mode is enabled.

The battery side of Fig.4 is a typical push-pull circuit, and when the first gated tap is enabled, power is drawn from the battery and boosted by the push-pull circuit and then provided to the bus and further inverted by the inverter to output a sine voltage to thereby have the UPS operative in the battery mode.

In this application, when the second gated tap is enabled, power is drawn from the bus and charges the battery backward through the half-bridge circuit. Particularly with the addition of two switch devices, which are the first transistor Q1 and the second transistor Q2, in the circuitry of the secondary side, backward DC/DC conversion is performed by a winding of the secondary side of the transformer to thereby make full use of the windings of the primary side and the secondary side of the transformer. The switch devices here, which are the first transistor Q1 and the second transistor Q2, can be IGBTs or MOSFETs or other switches. The added switch devices, which are the first transistor Q1 and the second transistor Q2, make use of the winding of the secondary side possibly as a half bridge or a full bridge or a push-pull circuit.

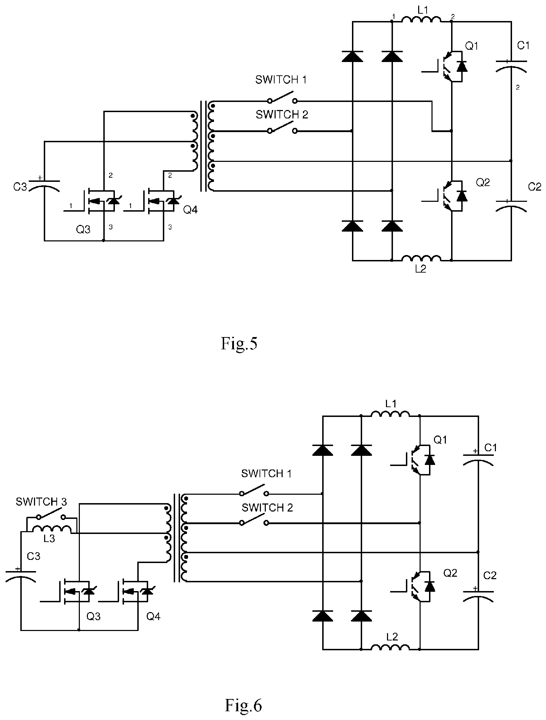

Referring to Fig.5, there is a circuit diagram of a second embodiment of the bidirectional DC/DC circuit according to this application.

The second embodiment of the bidirectional DC/DC circuit according to this application is different from the first embodiment in different changes in location of the taps.

Alike the first and second transistors Q1 and Q2 are a half-bridge structure; one terminal of the first transistor Q1 is connected with the positive terminal of the positive bus, one terminal of the second transistor Q2 is connected with the negative bus, the first transistor Q1 is connected with one terminal of the second transistor Q2, and the first gated switch SWITCH1 is arranged between a common terminal of the first transistor Q1 and the second transistor Q2

and the dotted terminal of the first tap of the secondary side of the isolated transformer, i.e., the first gated tap;

The second switch SWITCH2 is arranged between the dotted terminal of the second tap of the secondary side of the isolated transformer, i.e., the second gated tap, and the rectifier circuit; and

A first inductor L1 is arranged between the positive output O+ of the rectifier circuit, i.e., the rectifier bridge D, and the first transistor Q1; and a second inductor L2 is arranged between the positive output O- of the rectifier circuit, i.e., the rectifier bridge D, and the second transistor Q2.

When the second gated tap is enabled, power is drawn from the battery side to power the bus; and when the first gated tap is enabled, power is drawn from the bus side to power the battery.

Referring to Fig.6, there is a circuit diagram of a third embodiment of the bidirectional DC/DC circuit according to this application.

The third embodiment of the bidirectional DC/DC circuit according to this application is different from the first and second embodiments in the addition of a filter inductor L3 and a third switch SWITCH3 at the battery side.

When the charged battery B is discharged, the third switch SWITCH3 is closed to have the filter inductor L3 shorted-circuit, and the charged battery B powers the bus on the right side through the discharger.

When the charged battery B is charged, the third switch SWITCH3 is opened, and the filter inductor L3 plays a role of filtering to result in lower rippling of charging current of the battery.

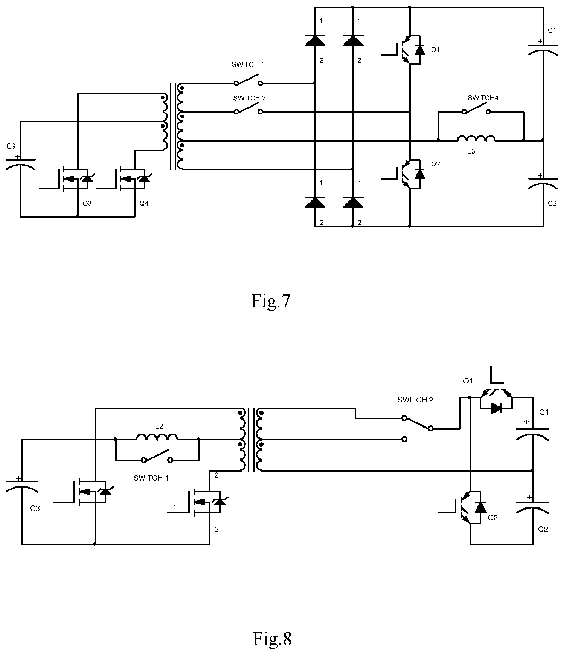

Referring to Fig.7, there is a circuit diagram of a fourth embodiment of the bidirectional DC/DC circuit according to this application.

The fourth embodiment of the bidirectional DC/DC circuit according to this application is different from the first and second embodiments in a full-bridge circuit variant at the bus side.

In the full-bridge circuit variant at the bus side, there are a fourth switch SWITCH4 and a third inductor L3 added. Particularly the third inductor L3 is arranged between a common terminal of the first capacitor C1 and the second capacitor C2 and a fixed tap of the secondary side of the isolated transformer (a third tap), and the fourth switch SWITCH4 is connected in parallel across the third inductor L3.

The third inductor L3 plays a role of filter to result in lower current rippling at the bus side.

When the battery is charged by the bus side, the fourth switch SWITCH4 is closed to have the third inductor L3 shorted-circuit to thereby charge the charged battery B by the bus side.

Referring to Fig.8, there is a circuit diagram of a fifth embodiment of the bidirectional DC/DC circuit according to this application.

The fifth embodiment of the bidirectional DC/DC circuit according to this application is different from the foregoing several embodiments in voltage-doubling rectification at the bus side.

The toggled switch SWITCH2 is arranged between the common terminal of the first transistor Q1 and the second transistor Q2, and the dotted terminal of the first tap (the first switched tap) and the second switched tap (i.e., the central tap in Fig.8, which is the second tap) of the secondary side of the isolated transformer.

The two switched taps can be selected and enabled by a toggled switch. That is, the toggled switch can only and must enable one of the switched taps, which is either the first switched tap or the second switched tap, at a time.

When the first switched tap is enabled, the bus-side powered by battery-side mode is enabled; particularly the bus is powered by the battery through controlling the transistor of the primary side to perform push-pull (PWM) wave transmission control.

When the second switched tap is enabled, the battery powered by bus-side mode is enabled; particularly the battery is powered by the bus through controlling the half-bridge circuit (PWM) constituted of the first and second transistors Q1 and Q2 of the secondary side to perform wave transmission control.

The toggled switch SWITCH2 can particularly a relay, a solid-state switch, etc., and the relay can be a single-pole double-throw or double-pole double-throw relay or can be two single-pole double-throw relays.

The common terminal of the first capacitor C1 and the second capacitor C2 is connected with the undotted terminal of the secondary side of the isolated transformer (the third tap, also referred to a fixed tap).

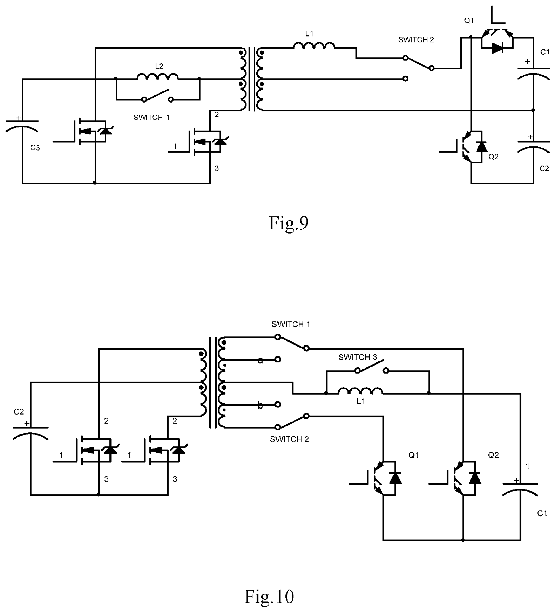

Referring to Fig.9, there is a circuit diagram of a sixth embodiment of the bidirectional DC/DC circuit according to this application.

The sixth embodiment of the bidirectional DC/DC circuit according to this application is different from the fifth embodiment in the first inductor L1 arranged between the first switched tap of the secondary side of the isolated transformer and the toggled switch SWITCH2.

The first inductor plays a role of filtering to result in lower current rippling at the bus side and also natural current commuting of the body diodes of the first and second transistors Q1 and Q2 of the secondary side.

Referring to Fig.10, there is a circuit diagram of a seventh embodiment of the bidirectional DC/DC circuit according to this application.

The seventh embodiment of the bidirectional DC/DC circuit according to this application is different from the sixth embodiment in full-wave rectification at the bus side.

In the seventh embodiment of the bidirectional DC/DC circuit according to this application, the secondary side of the isolated transformer includes two sets of switched taps including a first set of switched taps and a second set of switched taps.

The first set of switched taps includes a first switched tap and a second switched tap, and particularly the first toggled switch SWITCH1 is arranged between the dotted terminal of the first tap (the first switched tap) and the second tap (the second switched tap) of the secondary side of the isolated transformer, and the second transistor Q2. The first switched tap or the second switched tap is selected and enabled by the first toggled switch SWITCH 1.

The second set of switched taps includes a third switched tap and a fourth switched tap, and particularly the second toggled switch is arranged between an undotted terminal of a fifth tap (the fourth switched tap) and a fourth tap (the third switched tap) of the secondary side of the isolated transformer, and the first transistor Q1. The third switched tap or the fourth switched tap is selected and enabled by the second toggled switch SWITCH1.

The two toggled switches SWITCH1 and SWITCH2 may also be asynchronous to some extent, particularly different (asynchronous) by an offset on the millisecond (mS) order.

The two toggled switches SWITCH1 and SWITCH2 are preferably controlled correspondingly in a synchronous control pattern or by the same control signal.

The bus side is embodied as a full-wave rectifier circuit, and the ratios of turns of the transformer in charging and discharging can be changed by switching the ratios of turns through the two toggled switches SWITCH1 and SWITCH2.

The first inductor L1 is arranged between the dotted terminal of the fixed tap of the secondary side of the isolated transformer, that is, the central tap (the third tap) and the first capacitor C1 (there may be only the first capacitor C1 at the bus side in this embodiment), and the third switch SWITCH3 is arranged across the first inductor L1.

The first inductor L1 and the third switch SWITCH3 are used during charging and discharging respectively. During charging, the third switch SWITCH3 is closed to have the first inductor L1 shorted-circuit, and the first transistor Q1 and the second transistor Q2 started to transport power of the bus side to the battery side through the transformer. During discharging, the third switch SWITCH3 is opened, and the first inductor L1 is a filter inductor of the full-wave rectifier circuit.

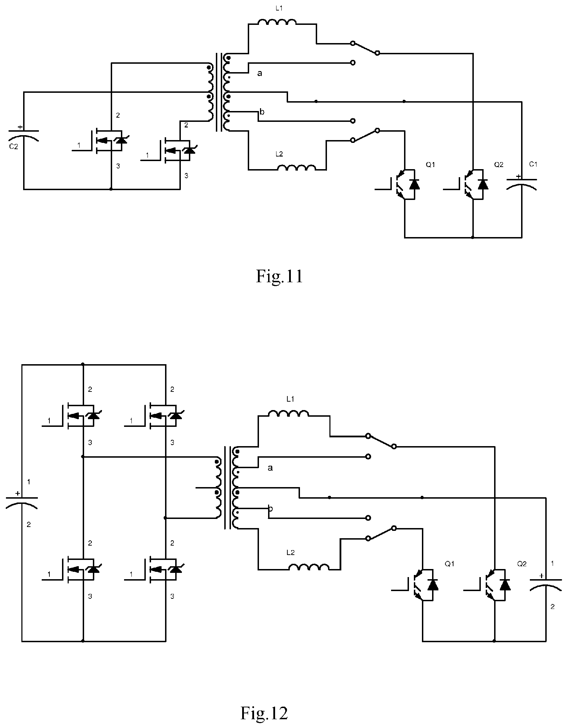

Referring to Fig.11, there is a circuit diagram of an eighth embodiment of the bidirectional DC/DC circuit according to this application.

The eighth embodiment of the bidirectional DC/DC circuit according to this application is different from the seventh embodiment in the removal of the first inductor and the third switch SWITCH3 between the fixed tap of the secondary side of the isolated transformer, that is, the central tap, and the first capacitor C1. The first inductor L1 is arranged between the dotted terminal of the secondary side of the isolated transformer, that is, the first switched tap, and the second transistor Q2, and the second inductor L2 is arranged between the undotted terminal of the fourth switched tap of the secondary side of the isolated transformer and the first transistor Q1.

Referring to Fig.12, there is a circuit diagram of a ninth embodiment of the bidirectional DC/DC circuit according to this application.

The ninth embodiment of the bidirectional DC/DC circuit according to this application is different from the eighth embodiment in a topology of the battery side and a full-bridge design of the primary side of the isolated transformer.

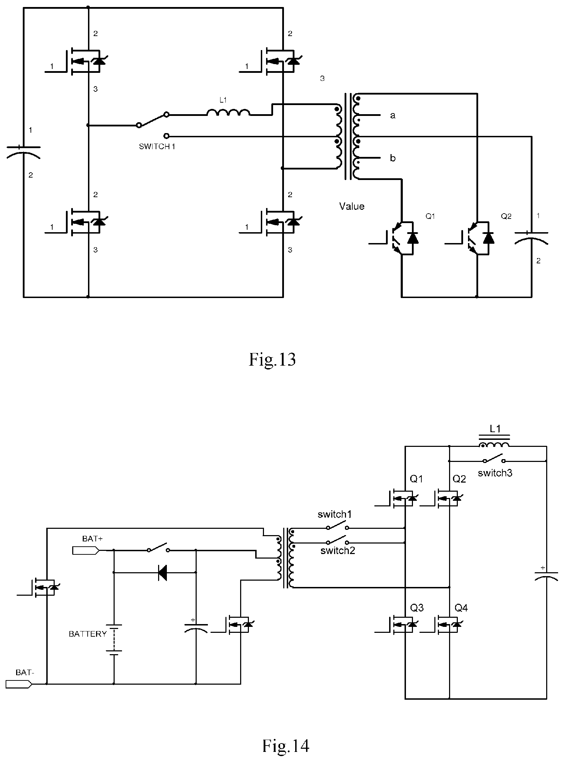

Referring to Fig.13, there is a circuit diagram of a tenth embodiment of the bidirectional DC/DC circuit according to this application.

The tenth embodiment of the bidirectional DC/DC circuit according to this application is different from the ninth embodiment in switching the ratio of turns at the battery side.

The toggled switch SWITCH1 is arranged between the dotted terminal (the first switched tap) and the central tap (the second switched tap) of the primary side of the isolated transformer and the rectifier circuit of the full-bridge structure; and the first inductor L1 is arranged between the toggled switch and the dotted terminal of the primary side of the isolated transformer.

When the first switched tap is enabled, the battery is charged by the bus side; and particularly the battery is charged by the bus side by controlling the first and second transistors Q1 and Q2 for pushing-pulling (the push-pull circuit can alternatively be a full-bridge circuit or a half-bridge circuit).

When the second switched tap is enabled, the battery is discharged; and particularly the bus side is powered by the battery by the full-bridge circuit of the primary side (the full-bridge circuit can alternatively be a push-pull circuit or a half-bridge circuit).

Referring to Fig.14, there is a circuit diagram of an eleventh embodiment of the bidirectional DC/DC circuit according to this application.

The eleventh embodiment of the bidirectional DC/DC circuit according to this application is different from the foregoing embodiments in that the secondary side of the isolated transformer is embodied as a full-bridge circuit consisting of the first, second, third and fourth transistors Q1, Q2, Q3 and Q4.

The dotted terminal of the first tap of the secondary side of the isolated transformer (the first gated tap) is connected with the common terminal of the first transistor Q1 and the third transistor Q3 through the first gated switch SWITCH 1.

The dotted terminal of the second tap of the secondary side of the isolated transformer (the second gated tap) is connected with the common terminal of the first transistor Q1 and the third transistor Q3 through the second enabled switch SWITCH2.

The undotted terminal of the secondary side of the isolated transformer (the fixed tap) is connected with the common terminal of the second transistor Q2 and the fourth transistor Q4.

A capacitor is connected in parallel across the full-bridge circuit, the inductor L1 is connected between the common terminal of the first transistor Q1 and the second transistor Q2, and the capacitor, and the third switch SWITCH3 is connected in parallel across the inductor L1.

When the battery of the primary side of the isolated transformer is discharged, the first gated switch SWITCH1 is closed (both the second gated switch SWITCH2 and the third switch SWITCH3 are controlled to be opened), and two push-pull transistors (transistors) of the push-pull circuit of the battery side (the primary side of the isolated transformer) are turned on and off alternatively at a high frequency to convert direct-current power of the battery into high-frequency alternating-current power transported to the bus side at the secondary side of the isolated transformer through the isolated transformer.

The inductor L1 plays a role of filtering current entering the capacitor of the bus side.

When the battery is charged, the second gated switch SWITCH2 and the third switch SWITCH3 are closed (the first gated switch SWITCH1 is opened), and the full-bridge circuit of the first to fourth transistors Q1 to Q4 is turned on and off to transport power of the bus side to the battery side through the isolated transformer to charge the battery after being rectified by the body diode of the transistor of the battery side.

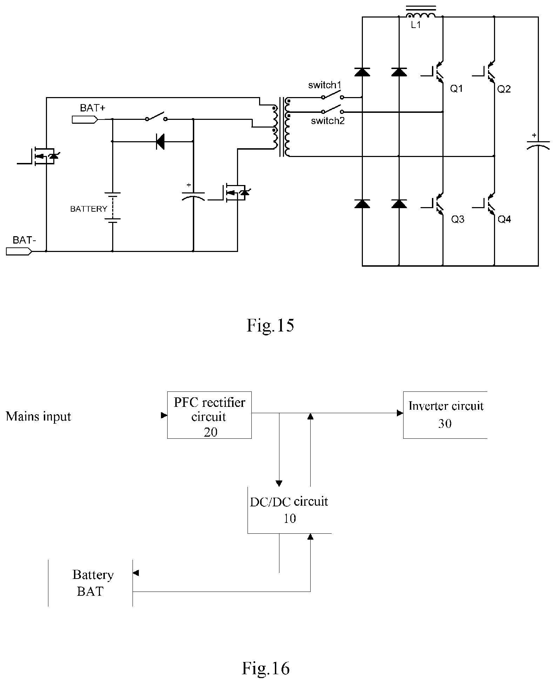

Referring to Fig.15, there is a circuit diagram of a twelfth embodiment of the bidirectional DC/DC circuit according to this application.

The twelfth embodiment of the bidirectional DC/DC circuit according to this application is different from the eleventh embodiment in a rectifier circuit connected at the secondary side of the isolated transformer and the removal of the third switch SWITCH3 across the inductor L1.

The dotted terminal of the first tap of the secondary side of the isolated transformer (the first gated tap) is connected with the rectifier circuit through the first gated switch SWITCH1.

The dotted terminal of the second tap of the secondary side of the isolated transformer (the second gated tap) is connected with the common terminal of the first transistor Q1 and the third transistor Q3 through the second gated switch SWITCH2.

The undotted terminal of the secondary side of the isolated transformer (the fixed tap) is connected with the common terminal of the second transistor Q2 and the fourth transistor Q4.

A capacitor is connected in parallel across the full-bridge circuit, the inductor L1 is connected between the common terminal of the first transistor Q1 and the second transistor Q2, and the rectifier circuit.

When the battery of the primary side of the isolated transformer is discharged, the first gated switch SWITCH1 is closed (the second gated switch SWITCH2 is controlled to be opened), and two push-pull transistors (transistors) of the battery side (the primary side of the isolated transformer) are turned on and off alternatively at a high frequency to convert direct-current power of the battery into high-frequency alternating-current power transported to the bus side (the secondary side of the isolated transformer) through the isolated transformer.

The inductor L1 plays a role of filtering current entering the capacitor of the bus side.

When the battery is charged, the second gated switch SWITCH2 is closed (the first gated switch SWITCH 1 is opened), and the full-bridge circuit of the first to fourth transistors Q1 to Q4 is turned on and off to transport power of the bus side to the battery side through the isolated transformer to charge the battery after being rectified by the body diode of the transistor of the battery side.

In any of the embodiments of the bidirectional DC/DC circuit according to this application, the ratio of turns can be switched at the battery side.

The toggled switch can particularly a relay, a solid-state switch, etc., and the relay can be a single-pole double-throw or double-pole double-throw relay or can be two single-pole double-throw relays.

The push-pull circuit or the half-bridge circuit or the full-bridge circuit connected at the primary side of the isolated transformer can be embodied as an MOS transistor, and an equivalent diode of the MOS transistor can act as an equivalent rectifier diode of the secondary side when the bidirectional DC/DC circuit draws power from the bus to charge the battery.

Fig.16 is a logic diagram of a further embodiment of a UPS according to this application, and the UPS includes a PFC rectifier circuit 20, an inverter circuit 30, a battery BAT and a DC/DC circuit 10, where the PFC rectifier circuit 20 is configured to PFC-rectify the mains voltage and charge the bus when the mains is normal; and the inverter circuit 30 is configured to invert the direct-current voltage of the bus to power a load. The following description will be focused upon the DC/DC circuit 10 which is connected between the bus and the battery BAT and which is a bidirectional DC/DC circuit, where in the charging mode (powering by the mains), the bidirectional DC/DC circuit 10 draws power from the bus and charges the battery BAT; and in the discharging mode (abnormality of the mains), the bidirectional DC/DC circuit 10 draws power from the battery BAT and powers the bus.

With an implementation of this technical solution, since the charging circuit and the discharging circuit are integrated in the UPS as a DC/DC circuit which is a bidirectional DC/DC circuit capable of both the charging and discharging functions, the UPS can be made less voluminous and less costly with a centralized hotspot to thereby comply with the trend of product minimization.

In a logic diagram of a preferred embodiment of the bidirectional DC/DC circuit of the UPS according to this application, the bidirectional DC/DC circuit includes an isolated transformer, a first selector unit, a fist chopper unit, a first rectifier unit, a second selector unit, a second chopper unit and a second rectifier unit, where the first selector unit, the first chopper unit and the first rectifier unit are arranged at the primary side of the isolated voltage, that is, the battery side; and the second selector unit, the second chopper unit and the second rectifier unit are arranged at the secondary side of the isolated transformer, that is, the bus side. Moreover in the charging mode, the second selector unit selects the second chopper unit for operation, and the first selector unit selects the first rectifier unit for operation; and in the discharging mode, the first selector unit selects the first chopper unit for operation, and the second selector unit selects the second rectifier unit for operation. With an implementation of this technical solution, in addition to the advantages of the UPS with a lower volume, a lower cost and a centralized hotspot, only the isolated transformer is used for both charging and discharging, and the first chopper unit used in the discharging mode is completely independent from the first rectifier unit used in the charging mode, and the second chopper unit used in the charging mode is completely independent from the second rectifier unit used in the discharging mode. Thus for both the battery side and the bus side, the separation of the rectifier unit from the chopper unit can have their respective appropriate devices selected effectively in view of demands for rectification and chopping so as to avoid one of the demands (voltage resistance and a backward recovery capability) for an improved level of voltage resistance of a device from making it difficult to select the type of the device in a practical application.

In the bidirectional DC/DC circuit, preferably there are multiple controllable taps at the primary side and/or the secondary side of the isolated transformer, and when there are multiple controllable taps at the primary side of the isolated transformer, the first chopper unit and the first rectifier unit are connected respectively with different controllable taps at the primary side of the isolated transformer. When there are multiple controllable taps at the secondary side of the isolated transformer, the second chopper unit and the second rectifier unit are connected respectively with different controllable taps at the secondary side of the isolated transformer. Of course, there are alternatively multiple controllable taps at both the primary side and the secondary side of the isolated transformer. Thus the ratios of turns of the primary side and the secondary side of the isolated transformer can be changed by selecting a controllable tap at the primary side and/or the secondary side of the isolated transformer to thereby adjust a charging or discharging voltage. Moreover the first chopper unit and the second chopper unit can be a push-pull chopper unit, a full-bridge chopper unit or a half-bridge chopper unit; and the first rectifier unit and the second rectifier unit can be a full-bridge rectifier unit, a full-wave rectifier unit, a voltage-doubling rectifier unit or a current-doubling rectifier unit. The first selector unit and the second selector unit can be a relay, a solid-state switch, etc. The relay can include at least one single-pole single-throw relay, single-pole double-throw relay or double-pole double-throw relay. Moreover the bidirectional DC/DC circuit can further include a current mutual inductor or a Hall sensor arranged at the primary side and/or the secondary side of the isolated transformer to sample current of the primary side and/or the secondary side of the isolated transformer.

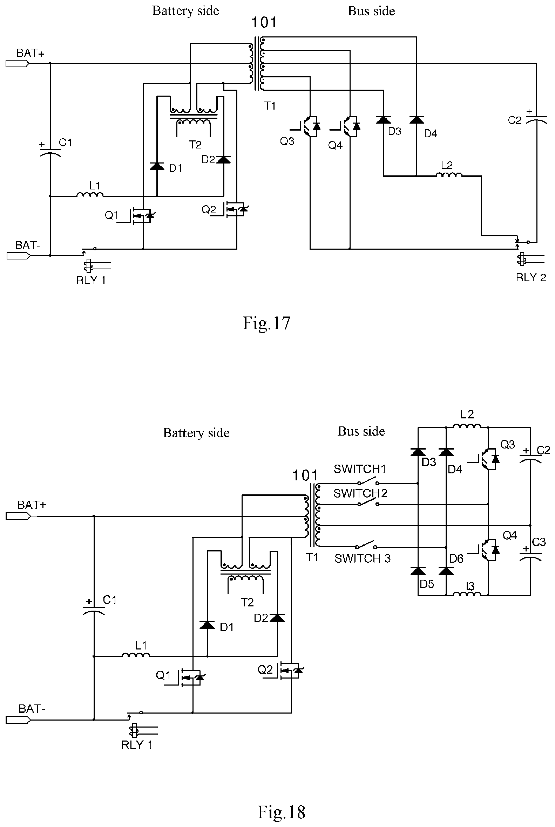

Fig.17 is a circuit diagram of a thirteenth embodiment of the bidirectional DC/DC circuit in the UPS according to this application, and at the battery side, the first selector unit is a relay RLY1 which is a single-pole single-throw relay. In the first chopper unit, the anode BAT+ of the battery is connected with the second (central) tap of the primary side of the isolated transformer T1, and the cathode BAT- of the battery is connected respectively with the source of the MOS transistor Q1 and the source of the MOS transistor Q2 through the relay RLY1, and the drain of the MOS transistor Q1 and the drain of the MOS transistor Q2 are connected respectively with the first tap (the dotted terminal) and the third tap (the undotted terminal) of the primary side of the isolated transformer T1. In the first rectifier unit, the first tap and the third tap of the primary side of the isolated transformer T1 are further connected respectively with the cathode of the diode D1 and the cathode of the diode D2 through the current mutual inductor T2, and the anode of the diode D1 and the anode of the diode D2 together are connected with the cathode BAT- of the battery through the filter inductor L1. Moreover the voltage-stabilizer capacitor C1 is connected in parallel between the anode BAT+ of the battery and the cathode BAT- of the battery. At the bus side, there are 5 taps in total at the secondary side of the isolated transformer T1, where the third (central) tap is connected with the anode of the bus capacitor C2. The second selector unit is a relay RLY2 which is a single-pole double-throw relay. In the second rectifier unit, the first tap and the fifth tap of the secondary side of the isolated transformer T1 are connected respectively with the cathode of the diode D3 and the cathode of the diode D4, and the anode of the diode D3 and the anode of the diode D4 together are connected with a first selector tap of the relay RLY2 through the filter inductor L2. In the second chopper unit, the second tap and the fourth tap of the secondary side of the isolated transformer T1 are connected respectively with the collector of the IGBT transistor Q3 and the collector of the IGBT transistor Q4, and the emitter of the IGBT transistor Q3 and the emitter of the IGBT transistor Q4 together are connected with a second selector tap of the relay RLY2. A moving tap of the relay RLY2 is connected with the cathode of the bus capacitor C2.

An operating principle of the bidirectional DC/DC circuit will be introduced below: both the first chopper unit of the battery side and the second chopper unit of the bus side are a push-pull chopper unit, and both the first rectifier unit of the battery side and the second rectifier unit of the bus side are a full-wave rectifier unit. In the charging mode, firstly the moving tap of the relay RLY2 is controlled to be connected with the second selector tap and the relay RLY1 is controlled to be opened, and at this time, the second chopper unit and the first rectifier unit operate. Then the IGBT transistor Q3 and the IGBT transistor Q4 are controlled for high-frequency chopping to thereby convert direct-current power drawn from the bus into high-frequency pulses, and power of the high-frequency pulses is transported to the battery side through the isolated transformer T1 and rectified by the first rectifier unit formed of the diodes D1 and D2 and then filtered by the filter inductor L1 and then charges the battery. In the discharging mode, firstly the relay RLY1 is controlled to be closed, and the moving tap of the relay RLY2 is controlled to be connected with the first selector tap, and at this time, the first chopper unit and the second rectifier unit operates. Then the MOS transistor Q1 and the MOS transistor Q2 are controlled for high-frequency chopping to thereby convert power of the battery into high-frequency pulses which are transported to the bus side through the isolated transformer T1 and rectified by the second rectifier unit formed of the diodes D3 and D4 and then powers the bus.

Fig.18 is a circuit diagram of a fourteenth embodiment of the bidirectional DC/DC circuit in the UPS according to this application, and comparing this embodiment with the bidirectional DC/DC circuit illustrated in Fig.17, the circuit structure of the primary side of the isolated transformer T1 is the same, and a repeated description thereof will be omitted here, and only the circuit structure of the secondary side of the isolated transformer T1 will be described. In this embodiment, the bus side is a dual-bus structure, and the second chopper unit is a half-bridge chopper unit, and the second rectifier unit is a full-bridge rectifier unit. At the bus side, there are 4 taps in total at the secondary side of the isolated transformer T1, and the third tap is connected with the cathode of the bus capacitor C2 and the anode of the bus capacitor C3. The second selector unit includes three solid-state switches SWITCH1, SWITCH2 and SWITCH3. In the second rectifier unit, diodes D3, D4, D5 and D6 constitute a full-bridge rectifier bridge, and two inputs of the full-bridge rectifier bridge are connected respectively with the first tap and the fourth tap of the secondary side of the isolated transformer T1 through the solid-state switches SWITCH1 and SWITCH3, a first output of the full-bridge rectifier bridge is connected with the anode of the bus capacitor C2 through the filter inductor L2, and a second output of the full-bridge rectifier bridge is connected with the cathode of the bus capacitor C3 through the filter inductor L3. In the second chopper unit, the collector of the IGBT transistor Q3 is connected with the anode of the bus capacitor C2, the emitter of the IGBT transistor Q4 is connected with the cathode of the bus capacitor, and the emitter of the IGBT transistor Q3 and the collector of the IGBT transistor Q4 together are connected with the second tap of the secondary side of the isolated transformer T1 through the solid-state switch SWITCH2.

An operating principle of the bidirectional DC/DC circuit will be introduced below: in the charging mode, firstly the solid-state switches SWITCH1 and SWITCH3 are controlled to be opened, and the solid-state switch SWITCH2 is controlled to be closed, and the relay RLY1 is controlled to be opened, and at this time, the second chopper unit and the first rectifier unit operate. Then the IGBT transistor Q3 and the IGBT transistor Q4 are controlled for high-frequency chopping to thereby convert direct-current power drawn from the bus into high-frequency pulses, and power of the high-frequency pulses is transported to the battery side through the isolated transformer T1 and rectified by the first rectifier unit formed of the diodes D1 and D2 and then filtered by the filter inductor L1 and then charges the battery. In the discharging mode, firstly the relay RLY1 is controlled to be closed, the solid-state switches SWITCH1 and SWITCH3 are controlled to be closed, and the solid-state switch SWITCH2 is controlled to be opened, and at this time, the first chopper unit and the second rectifier unit operates. Then the MOS transistor Q1 and the MOS transistor Q2 are controlled for high-frequency chopping to thereby convert power of the battery into high-frequency pulses which are transported to the bus side through the isolated transformer T1 and rectified by the second rectifier unit formed of the diodes D3, D4, D5 and D6 and then powers the bus.

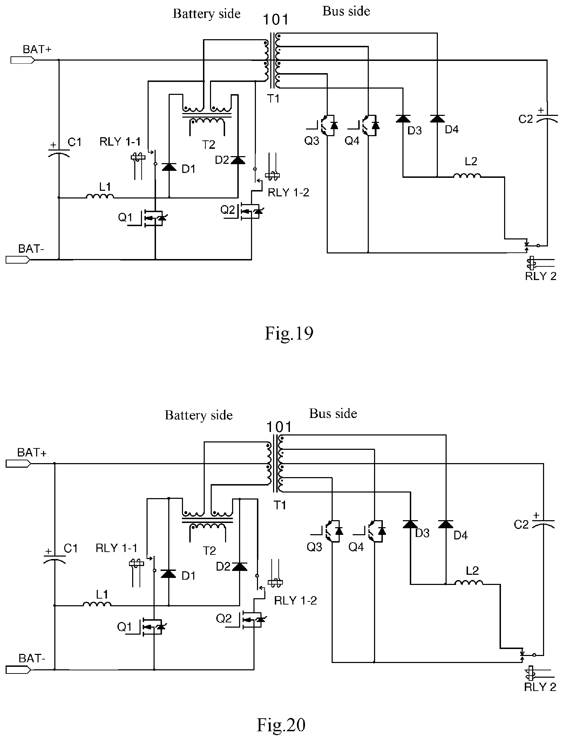

Fig.19 is a circuit diagram of a fifteenth embodiment of the bidirectional DC/DC circuit in the UPS according to this application, and comparing this embodiment with the bidirectional DC/DC circuit illustrated in Fig.17, the only difference is circuit structures of the first selector unit and the first chopper unit. The first selector unit includes two relays RLY1-1 and RLY1-2 which are a single-pole single-throw relay respectively. In the first chopper unit, the source of the MOS transistor Q1 and the source of the MOS transistor Q1 together are connected with the cathode BAT- of the battery, the drain of the MOS transistor Q1 is connected with the first tap of the primary side of the isolated transformer T1 through the relay RLY1-1, and the drain of the MOS transistor Q1 is connected with the third tap of the primary side of the isolated transformer T1 through the relay RLY1-2.

An operating process of the bidirectional DC/DC circuit according to this embodiment is the same as the operating process of the bidirectional DC/DC circuit according to the first embodiment except for that in the charging mode, the moving tap of the relay RLY2 is controlled to be connected with the second selector tap, and the relays RLY1-1 and RLY-2 are controlled to be opened, and at this time, the second chopper unit and the first rectifier unit operate. In the discharging mode, firstly the relays RLY1-1 and RLY-2 are controlled to be closed, and the moving tap of the relay RLY2 is controlled to be connected with the first selector tap, and at this time, the first chopper unit and the second rectifier unit operate.

Fig.20 is a circuit diagram of a sixteenth embodiment of the bidirectional DC/DC circuit in the UPS according to this application, and comparing this embodiment with the bidirectional DC/DC circuit illustrated in Fig.19, the only difference is that one terminal of the relay RLY1-1 and the cathode of the diode D1 together are connected with one terminal of the current mutual inductor T2, and one terminal of the relay RLY1-2 and the cathode of the diode D2 together are connected with the other terminal of the current mutual inductor T2. In the bidirectional DC/DC circuit according to this embodiment, the current mutual inductor T2 can sample current of the battery in both the charging mode and the discharging mode.

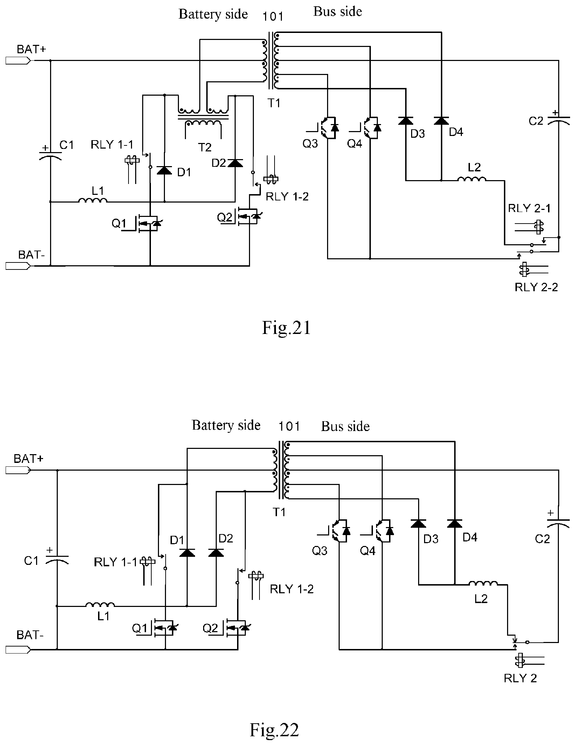

Fig.21 is a circuit diagram of a seventeenth embodiment of the bidirectional DC/DC circuit in the UPS according to this application, and comparing this embodiment with the bidirectional DC/DC circuit illustrated in Fig.20, the only difference is that the two single-pole single-throw relays RLY2-1 and RLY2-2 are used instead of the single-pole double-throw relays RLY2, and one terminal of the relay RLY2-1 is connected with the filter inductor L2, and one terminal of the relay RLY2-2 is connected with the IGBT transistors Q3 and Q4. Both the other terminal of the relay RLY2-1 and the other terminal of the relay RLY2-2 are connected with the cathode of the bus capacitor C2.

Fig.22 is a circuit diagram of an eighteenth embodiment of the bidirectional DC/DC circuit in the UPS according to this application, and comparing this embodiment with the bidirectional DC/DC circuit illustrated in Fig.20, the only difference is that the current mutual inductor is omitted, that is, the cathode of the diode D1 and one terminal of the relay RLY1-1 together are connected with the first tap of the primary side of the isolated transformer T1, and the cathode of the diode D2 and the one terminal of the relay RLY1-2 together are connected with the third tap of the primary side of the isolated transformer T1. Moreover it shall be further noted that the current mutual inductor can alternatively be arranged at the secondary side of the isolated transformer T1.

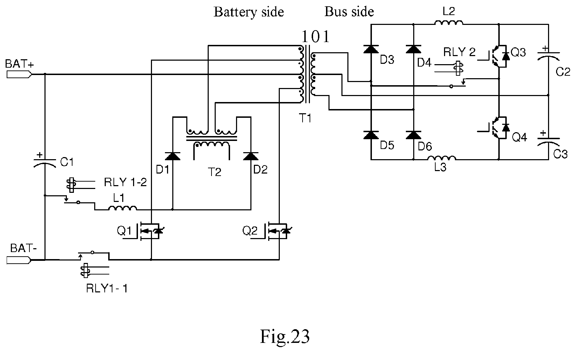

All the foregoing embodiments have been described above by way of an example in which there are multiple controllable taps at the secondary side of the isolated transformer, and of course, there are multiple controllable taps at the primary side of the isolated transformer, for example, in the circuit diagram of a nineteenth embodiment of the bidirectional DC/DC circuit in the UPS according to this application illustrated in Fig.23, at the battery side, there are 5 taps in total at the primary side of the isolated transformer T1, where the third (central) tap is connected with the anode BAT+ of the battery. The first selector unit includes the relays RLY1-1 and RLY1-2 which are a single-pole single-throw relay. In the first chopper unit, the cathode BAT- of the battery is connected respectively with the source of the MOS transistor Q1 and the source of the MOS transistor Q2 through the relay RLY1-1, and the drain of the MOS transistor Q1 and the drain of the MOS transistor Q2 are connected respectively with the second tap and the fourth tap of the primary side of the isolated transformer T1. In the first rectifier unit, the cathode BAT- of the battery is connected respectively with the anode of the diode D1 and the anode of the diode D2 through the relay RLY1-2 and the filter inductor L1, and the cathode of the diode D1 and the cathode of the diode D2 are connected respectively with the first tap and the fifth tap of the primary side of the isolated transformer T1 through the current mutual inductor T2. Moreover the voltage-stabilizer capacitor C1 is connected in parallel between the anode BAT+ of the battery and the cathode BAT- of the battery. At the bus side, the second selector unit includes the relay RLY2 which is a single-pole single-throw relay. In the second rectifier unit, the diodes D3, D4, D5 and D6 constitute a full-bridge diode rectifier bridge, and two inputs of the rectifier bridge are connected respectively with the first tap (the dotted terminal) and the third tap (the undotted terminal) of the secondary side of the isolated transformer T1, a first output of the rectifier bridge is connected with the anode of the bus capacitor C2 through the filter inductor L2, and a second output of the rectifier bridge is connected with the cathode of the bus capacitor C3through the filter inductor L3. In the second chopper unit, the collector of the IGBT transistor Q3 is connected with the anode of the bus capacitor C2, the emitter of the IGBT transistor Q4 is connected with the cathode of the bus capacitor C3, the emitter of the IGBT transistor Q3 and the collector of the IGBT transistor Q4 together are connected with the first tap of the secondary side of the isolated transformer T1 through the relay RLY2, and the second (central) tap of the isolated transformer T1 is connected with the cathode of the bus capacitor C2 and the anode of the bus capacitor C3.

An operating principle of the bidirectional DC/DC circuit according to this embodiment is similar to the operating principle of the bidirectional DC/DC circuit according to the embodiment illustrated in Fig.18 except for that in the charging mode, the relay RLY2 is closed, the relay RLY1-2 is closed, and the relay RLY1-1 is opened. In the discharging mode, the relay RLY1-1 is closed, the relay RLY1-2 is opened, and the relay RLY2 is opened.

The foregoing is merely illustrative of several embodiment of this application, and of course, in other embodiments, the first chopper unit and the second chopper unit can be in the form of a push-pull chopper unit, a full-bridge chopper unit or a half-bridge chopper unit, and the first rectifier unit and the second rectifier unit can be in the form of a full-bridge rectifier unit, a full-wave rectifier unit, a voltage-doubling rectifier unit or a current-doubling rectifier unit, and the first chopper unit, the second chopper unit, the first rectifier unit and the second rectifier unit in a number of forms can be combined differently. Moreover this application will not be limited in term of the types of an MOS transistor and an IGBT transistor and the location where current is sampled, that is, the location of the current mutual inductor or the Hall sensor.

The foregoing description is merely illustrative of preferred embodiments of this application but not to limit this application in any form. Although this application has been disclosed above in the preferred embodiments, this application will not be limited thereto. Any skilled in the art can make numerous possible variations and modifications to the technical solution of this application or modify it to equivalent embodiments with equivalent variations in light of the method and disclosure above without departing from the scope of the invention as defined in the appended claims.

**Claims**

1. A DC/DC circuit for an uninterruptible power supply, wherein the DC/DC circuit for an uninterruptible power supply is a bidirectional DC/DC circuit (8) connected between a bus and a battery (B); and
in a mains mode, the bidirectional DC/DC circuit (8) draws power from the bus and charges the battery (B); and when the mains becomes abnormal, the bidirectional DC/DC circuit (8) draws from the battery (B) and powers the bus, wherein the bidirectional DC/DC circuit (8) comprises an isolated transformer (101), and a primary side of the isolated transformer (101) is connected with a push-pull circuit or a half-bridge circuit or a full-bridge circuit; and a secondary side of the isolated transformer (101) is connected with a push-pull circuit or a half-bridge circuit or a full-bridge circuit; **characterized in that**:

   the isolated transformer (101) is provided with multiple controllable taps; and the bidirectional DC/DC circuit (8) has the ratio of turns switched by selecting a controllable tap of the primary side and/or the secondary side of the isolated transformer (101); and
   an anode of the battery (B) is connected with a second tap, that is a central tap, of the primary side of the isolated transformer (101), a cathode of the battery (B) is connected through a filter inductor (L1) to a first rectifier unit (D1, D2), and is connected respectively with a second terminal of a first transistor (Q1) and a second terminal of a second transistor (Q2) through a first relay, a first terminal of the first transistor (Q1) and a first terminal of the second transistor (Q2) are connected respectively with a first tap, that is a dotted terminal, and a third tap, that is an undotted terminal, of the primary side of the isolated transformer (101), so that only the isolated transformer (101) is used for both charging and discharging modes of the battery (B), and that a first chopper unit, comprising the first transistor (Q1) and the second transistor (Q2), used in the discharging mode is completely independent from the first rectifier unit used in the charging mode.

2. The DC/DC circuit for an uninterruptible power supply according to claim 1, wherein the secondary side of the isolated transformer (101) is connected with a rectifier circuit and both terminals of the rectifier circuit are connected concurrently in parallel with first and second transistors (Q1, Q2) and with a capacitor (C1, C2).

3. The DC/DC circuit for an uninterruptible power supply according to claim 2, wherein the controllable taps are two gated taps of the secondary side of the isolated transformer (101);
the first gated tap is connected with the rectifier circuit or a common terminal of the first and second transistors (Q1, Q2);
the second gated gap is connected with the common terminal of the first and second transistors (Q1, Q2) or the rectifier circuit;
the first and second transistors (Q1, Q2) are a half-bridge structure; and one terminal of the first transistor (Q1) is connected with a positive terminal of a positive bus, one terminal of the second transistor (Q2) is connected with a negative bus, the first transistor (Q1) is connected with one terminal of the second transistor (Q2), and a first gated switch (switch 1) is arranged between the common terminal of the first transistor (Q1) and the second transistor (Q2) and a dotted terminal of a first tap of the secondary side of the isolated transformer (101), that is the first gated tap; and
a second gated switch (switch2) is arranged between a dotted terminal of a second tap of the secondary side of the isolated transformer (101), that is the second gated tap, and the rectifier circuit.

4. The DC/DC circuit for an uninterruptible power supply according to claim 2, wherein the controllable taps are first and second switched taps of the secondary side of the isolated transformer (101);
a first toggled switch (switch1) is arranged between a common terminal of the first transistor (Q1) and the second transistor (Q2) and a dotted terminal of the secondary side of the isolated transformer (101), that is, the first switched tap and the second switched tap;
the first toggled switch (switch1) is configured to switch the first switched tap or the second switched tap to be closed;

and
a first inductor (L1) is arranged between the first switched tap and the first toggled switch (switch1).

5. The DC/DC circuit for an uninterruptible power supply according to any one of claims 1 to 4, wherein:

a third filtering inductor (L3) and a third switch (switch3) are added at the battery (B) side, and when the battery (B) is discharged, the third switch (switch3) is closed to have the third filtering inductor (L3) shorted-circuit, and the battery powers the bus through a discharger; and when the battery (B) is charged, the third switch (switch3) is opened, and the filtering inductor (L3) plays a role of filtering.

6. The DC/DC circuit for an uninterruptible power supply according to claim 2, wherein at least one of:

A) a filtering inductor (L3) and a switch (switch4) are added between a dotted terminal of a fixed tap of the secondary side of the isolated transformer (101) and a common terminal of the two capacitors (C1, C2); and
B) the controllable taps are two sets of switched taps of the secondary side of the isolated transformer (101); the first set of switched taps comprises a first switched tap and a second switched tap; a first toggled switch (switch1) is arranged between the first switched tap, the second switched tap and the second transistor Q2; and the first switched tap or the second switched tap is selected and enabled by the first toggled switch; the second set of switched taps comprises a third switched tap and a fourth switched tap; a second toggled switch (switch2) is arranged between the third switched tap, the fourth switched tap and the first transistor Q1; and the third switched tap or the fourth switched tap is selected and enabled by the second toggled switch (switch2); the bus side is a full-wave rectifier circuit, and the ratios of turns of the transformer (101) in charging and discharging are changed by switching the ratios of turns through the first and second toggled switches (switch1, switch2); and
a first inductor (L1) and a third switch (switch3) connected in parallel across the first inductor (L1) are arranged between a dotted terminal of a fixed tap of the secondary side of the isolated transformer (101) and the capacitor (C1); and
the first inductor (L1) is arranged between the first switched tap of the secondary side of the isolated transformer (101) and the second transistor (Q2), and a second inductor (L2) is arranged between a fourth switched tap of the secondary side of the isolated transformer (101) and the first switch (switch1).

7. The DC/DC circuit for an uninterruptible power supply according to claim 1, wherein:
the push-pull circuit or the half-bridge circuit or the full-bridge circuit connected at the primary side of the isolated transformer (101) is embodied as an MOS transistor, and an equivalent diode of the MOS transistor acts as an equivalent rectifier diode of the secondary side when the bidirectional DC/DC circuit (8) draws power from the bus to charge the battery (B).

8. The DC/DC circuit for an uninterruptible power supply according to claim 1, wherein the bidirectional DC/DC circuit (8) comprises:

an isolated transformer (101);
a first selector unit, a first chopper unit and a first rectifier unit arranged at a primary side of the isolated transformer (101); and
a second selector unit, a second chopper unit and a second rectifier unit arranged at a secondary side of the isolated transformer (101); and
in the mains mode, the second selector unit selects the second chopper unit for operation, and the first selector unit selects the first rectifier unit for operation; and when the mains becomes abnormal, the first selector unit selects the first chopper unit for operation, and the second selector unit selects the second rectifier unit for operation.

9. The DC/DC circuit for an uninterruptible power supply according to claim 8, wherein there are multiple controllable taps at the primary side and/or the secondary side of the isolated transformer (101), and the first chopper unit and the first rectifier unit are connected respectively with different controllable taps at the primary side of the isolated transformer (101) and/or the second chopper unit and the second rectifier unit are connected respectively with different controllable taps at the secondary side of the isolated transformer (101); the first chopper unit and the second chopper unit are a push-pull chopper unit, a full-bridge chopper unit or a half-bridge chopper unit;

the first rectifier unit and the second rectifier unit is a full-bridge rectifier unit, a full-wave rectifier unit, a voltage-doubling rectifier unit or a current-doubling rectifier unit;

the first selector unit and the second selector unit are a relay and/or a solid-state switch; and

when the first selector unit and the second selector unit are a relay, the relay comprises at least one single-pole single-throw relay, single-pole double-throw relay or double-pole double-throw relay.

10. The DC/DC circuit for an uninterruptible power supply according to claim 8, wherein at least one of:

A) the bidirectional DC/DC circuit (8) further comprises a current mutual inductor or a Hall sensor arranged at the primary side and/or the secondary side of the isolated transformer (101) to sample current of the primary side and/or the secondary side of the isolated transformer (101); and

the bidirectional DC/DC circuit (8) further comprises a filtering inductor (L3) arranged at the primary side and/or the secondary side of the isolated transformer (101);

and

B) the first selector unit comprises a single-pole single-throw first relay (RLY1), the second selector unit comprises a single-pole double-throw second relay (RLY2), the first chopper unit comprises a first transistor (Q1) and a second transistor (Q2), the second chopper unit comprises a third transistor (Q3) and a fourth transistor (Q4), the first rectifier unit comprises a first diode (D1) and a second diode (D2), and the second chopper unit comprises a third diode (D3) and a fourth diode (D4), and the bidirectional DC/DC (8) circuit further comprises a first filtering inductor (L1) arranged at the primary side of the isolated transformer (101), a second filter inductor (L2) arranged at the secondary side of the isolated transformer (101), and a current mutual inductor (T2), arranged at the primary side of the isolated transformer (101), and

the first tap and the third tap of the primary side of the isolated transformer (101) are further connected respectively with a cathode of the first diode (D1) and a cathode of the second diode (D2) through the current mutual inductor (T2), and an anode of the first diode (D1) and an anode of the second diode (D2) together are connected with the cathode of the battery (B) through the first filter inductor (LI); and a third tap, that is a central tap, of the secondary side of the isolated transformer (101) is connected with a positive bus, a first tap and a fifth tap of the secondary side of the isolated transformer (101) are connected respectively with a cathode of the third diode (D3) and a cathode of the fourth diode (D4), an anode of the third diode (D3) and an anode of the fourth diode (D4) together are connected with a first selector tap of the second relay (RLY2) through the second filtering inductor (L2), a second tap and a fourth tap of the secondary side of the isolated transformer (101) are connected respectively with a first terminal of the third transistor (Q3) and a first terminal of the fourth transistor (Q4), a second terminal of the third transistor (Q3) and a second terminal of the fourth transistor (Q4) together are connected with a second selector tap of the second relay, and a moving tap of the second relay (RLY2) is connected with a negative bus.

11. The DC/DC circuit for an uninterruptible power supply according to claim 8, wherein the first selector unit comprises a single-pole single-throw first relay (RLY1-1) and third relay (RLY1-2), the second selector unit comprises a single-pole double-throw second relay (RLY2), the first chopper unit comprises a first transistor (Q1) and a second transistor (Q2), the second chopper unit comprise a third transistor (Q3) and a fourth transistor (Q4), the first rectifier unit comprises a first diode (D1) and a second diode (D2), and the second rectifier unit comprises a third diode (D3) and a fourth diode (D4), and the bidirectional DC/DC circuit (8) further comprises a first filtering inductor (L1) arranged at the primary side of the isolated transformer (101), a second filter inductor (L2) arranged at the secondary side of the isolated transformer (101), and a current mutual inductor (T2) arranged at the primary side of the isolated transformer (101), and

an anode of the battery (B) is connected with a second tap, that is a central tap, of the primary side of the isolated transformer (101), a cathode of the battery (B) is connected respectively with a second terminal of the first transistor (Q1) and a second terminal of the second transistor (Q2), a first terminal of the first transistor (Q1) is connected with a first tap, that is a dotted terminal, of the primary side of the isolated transformer (101) through the first relay (RLY1-1), a first terminal of the second transistor (Q2) is connected with a third tap, that is an undotted terminal, of the primary side of the isolated transformer (101) through the third relay (RLY1-2), the first tap and the third tap of the primary side of the isolated transformer (101) are further connected respectively with a cathode of the first diode (D1) and a cathode of the second diode (D2) through the current mutual inductor (T2), and an anode of the first diode (D1) and an anode of the second diode (D2) together are connected with the cathode of the battery (B) through the first filter inductor (LI); and a third tap, that is a central tap, of the secondary side of the isolated transformer (101) is connected with a positive bus, a first tap and a fifth tap of the secondary side of the isolated transformer (101) are connected respectively with a cathode of the third diode (D3) and a cathode of the fourth diode (D4), an anode of the third diode (D3) and an anode of the fourth diode (D4) together are connected with a first selector tap of the second relay through the second filtering inductor (L2), a second tap and a fourth tap of the secondary side of the isolated transformer (101) are connected respectively with a first terminal of the third transistor (Q3) and a first terminal of the fourth transistor (Q4), a second terminal of the third transistor (Q3) and a second terminal of the fourth transistor (Q4) together are connected with a second selector tap of the second relay (RLY2), and a moving tap of the second relay (RLY2) is connected with a negative bus.

12. The DC/DC circuit for an uninterruptible power supply according to claim 8, wherein the first selector unit comprises a single-pole single-throw first relay, the second selector unit comprises three switches, i.e. a first switch (switch1), a second switch (switch 2) and a third switch (switch3), the first chopper unit comprises a first transistor (Q1) and a second transistor (Q2), the second chopper unit is a half-bridge chopper unit, the first rectifier unit comprises a first diode (D1) and a second diode (D2), and the second rectifier unit is a full-bridge rectifier unit, and the bidirectional DC/DC circuit (8) further comprises a first filtering inductor (L1) arranged at the primary side of the isolated transformer (101), and a current mutual inductor (T2) arranged at the primary side of the isolated transformer (101), and an anode of the battery (B) is connected with a second tap, that is a central tap, of the primary side of the isolated transformer (101), a cathode of the battery (B) is connected with a second terminal of the first transistor (Q1) and a second terminal of the second transistor (Q2) through the first relay (RLY1-1), a first terminal of the first transistor (Q1) and a first terminal of the second transistor (Q2) are connected respectively with a first tap, that is a dotted terminal, and a third tap, that is an undotted terminal, of the primary side of the isolated transformer (101), the first tap and the third tap of the primary side of the isolated transformer (101) are further connected respectively with a cathode of the first diode (D1) and a cathode of the second diode (D2) through the current mutual inductor (T2), and an anode of the first diode (D1) and an anode of the second diode (D2) together are connected with the cathode of the battery (B) through the first filter inductor (LI); and the secondary side of the isolated transformer (101) is a dual-bus structure, there are four taps in total at the secondary side of the isolated transformer (101), and the third tap is connected with the cathode of a second bus capacitor (C2) and the anode of a third bus capacitor (C3), in the second rectifier unit, a third diode (D3), a fourth diode (D4), a fifth diode (D5) and a sixth diode (D6) constitute a full-bridge rectifier bridge, and two inputs of the full-bridge rectifier bridge are connected respectively with the first tap and the fourth tap of the secondary side of the isolated transformer (101) through the first switch (switch1) and the third switch (switch3), a first output of the full-bridge rectifier bridge is connected with the anode of the second bus capacitor (C2) through a second filter inductor (L2), and a second output of the full-bridge rectifier bridge is connected with the cathode of the third bus capacitor (C3) through the third filter inductor (L3), in the second chopper unit, a first terminal of a third transistor (Q3) is connected with the anode of the second bus capacitor (C2), a second terminal of a fourth transistor (Q4) is connected with the cathode of the third bus capacitor (C3), and a second terminal of the third transistor (Q3) and a first terminal of the fourth transistor (Q4) together are connected with the second tap of the secondary side of the isolated transformer (101) through the second switch (switch2).

13. The DC/DC circuit for an uninterruptible power supply according to claim 8, wherein there are five taps in total at the primary side of the isolated transformer (101), where a third tap, that is a central tap, is connected with the anode of the battery (B), the first selector unit includes a first relay (RLY1-1) and a second relay (RLY2) which are a single-pole single-throw relay, in the first chopper unit, the cathode of the battery (B) is connected respectively with a second terminal of a first transistor (Q1) and a second terminal of a second transistor (Q2) through the first relay (RLY1-1), and a first terminal of the first transistor (Q1) and a first terminal of the second transistor (Q2) are connected respectively with a second tap and a fourth tap of the primary side of the isolated transformer (101), in the first rectifier unit, the cathode of the battery (B) is connected respectively with the anode of the first diode (D1) and the anode of the second diode (D2) through the second relay (RLY2) and the first filter inductor (L1), and the cathode of the first diode (D1) and the cathode of the second diode (D2) are connected respectively with a first tap and a fifth tap of the primary side of the isolated transformer (101) through a current mutual inductor (T2), a voltage-stabilizer capacitor (C1) is connected in parallel between the anode of the battery (B) and the cathode of the battery (B), the second selector unit includes a third relay (RLY1-2) which is a single-pole single-throw relay, in the second rectifier unit, a third diode (D3), a fourth diode (D4), a fifth diode (D5) and a sixth diode (D6) constitute a full-bridge diode rectifier bridge, and two inputs of the rectifier bridge are connected respectively with the first tap, that is the dotted terminal, and the third tap, that is the undotted terminal, of the secondary side of the isolated transformer (101), a first output of the rectifier bridge is connected with the anode of a second bus capacitor (C2) through the second filter inductor (L2), and a second output of the rectifier bridge is connected with the cathode of a third bus capacitor (C3) through the third filter inductor (L3), in the second chopper unit, the first terminal of the third transistor (Q3) is connected with the anode of the second bus capacitor, the second terminal of the fourth transistor (Q4) is connected with the cathode of the third bus capacitor (C3), the second terminal of the third transistor (Q3) and the first terminal of the fourth transistor (Q4) together are connected with the first tap of the secondary side of the isolated transformer (101) through the third relay (RLY1-2), and the second tap, that is the central tap, of the isolated transformer (101) is connected with the cathode of the second bus capacitor (C2) and the anode of the third bus capacitor (C3).

**14.** A UPS, wherein the UPS comprises the DC/DC circuit according to claims 1-13.

**Patentansprüche**

**1.** DC/DC-Schaltung für eine unterbrechungsfreie Stromversorgung, wobei die DC/DC-Schaltung für eine unterbrechungsfreie Stromversorgung eine bidirektionale DC/DC-Schaltung (8) ist, die zwischen einem Bus und einer Batterie (B) angeschlossen ist; und
die bidirektionale DC/DC-Schaltung (8) bei einem Netzbetrieb Strom aus dem Bus zieht und die Batterie (B) lädt; und wenn das Netz anormal wird, die bidirektionale DC/DC-Schaltung (8) Strom aus der Batterie (B) zieht und den Bus betreibt,
wobei die bidirektionale DC/DC-Schaltung (8) einen isolierten Transformator (101) umfasst und eine Primärseite des isolierten Transformators (101) mit einer Gegentaktschaltung oder einer Halbbrückenschaltung oder einer Vollbrückenschaltung verbunden ist; und eine Sekundärseite des isolierten Transformators (101) mit einer Gegentaktschaltung oder einer Halbbrückenschaltung oder einer Vollbrückenschaltung verbunden ist;
**dadurch gekennzeichnet, dass**:

der isolierte Transformator (101) mit mehreren steuerbaren Abgriffen bereitgestellt wird; und die bidirektionale DC/DC-Schaltung (8) das Verhältnis von Windungen umschaltet durch Auswählen eines steuerbaren Abgriffs der Primärseite und/oder der Sekundärseite des isolierten Transformators (101); und
eine Anode der Batterie (B) mit einem zweiten Abgriff, der ein zentraler Abgriff ist, der Primärseite des isolierten Transformators (101) verbunden ist, eine Kathode der Batterie (B) durch eine Filterinduktionsspule (L1) mit einer ersten Gleichrichtereinheit (D1, D2) verbunden ist und jeweils mit einem zweiten Anschluss eines ersten Transistors (Q1) und mit einem zweiten Anschluss eines zweiten Transistors (Q2) durch ein erstes Relais verbunden ist, ein erster Anschluss des ersten Transistors (Q1) und ein erster Anschluss des zweiten Transistors (Q2) jeweils mit einem ersten Abgriff, der ein punktiert gezeichneter Anschluss ist, und mit einem dritten Abgriff, der ein nicht punktiert gezeichneter Anschluss ist, der Primärseite des isolierten Transformators (101) verbunden sind, so dass nur der isolierte Transformator (101) sowohl zum Ladebetrieb als auch zum Entladebetrieb der Batterie (B) verwendet wird, und dass eine erste Zerhackereinheit, die den ersten Transistor (Q1) und den zweiten Transistor (Q2) umfasst und die bei dem Entladebetrieb, verwendet wird, vollständig unabhängig von der ersten Gleichrichtereinheit ist, die bei dem Ladebetrieb verwendet wird.

**2.** DC/DC-Schaltung für eine unterbrechungsfreie Stromversorgung nach Anspruch 1, wobei die Sekundärseite des isolierten Transformators (101) mit einer Gleichrichterschaltung verbunden ist und beide Anschlüsse der Gleichrichterschaltung gleichzeitig parallel mit einem ersten und einem zweiten Transistor (Q1, Q2) und mit einem Kondensator (C1, C2) verbunden sind.

**3.** DC/DC-Schaltung für eine unterbrechungsfreie Stromversorgung nach Anspruch 2, wobei die steuerbaren Abgriffe zwei gattergesteuerte Abgriffe der Sekundärseite des isolierten Transformators (101) sind;
der erste gattergesteuerte Abgriff mit der Gleichrichterschaltung oder einem gemeinsamen Anschluss des ersten und des zweiten Transistors (Q1, Q2) verbunden ist;
der zweite gattergesteuerte Abgriff mit dem gemeinsamen Anschluss des ersten und des zweiten Transistors (Q1, Q2) oder mit der Gleichrichterschaltung verbunden ist;
der erste und der zweite Transistor (Q1, Q2) eine Halbbrückenstruktur sind; und ein Anschluss des ersten Transistors (Q1) mit einem positiven Anschluss eines positiven Busses verbunden ist, ein Anschluss des zweiten Transistors (Q2) mit einem negativen Bus verbunden ist, der erste Transistor (Q1) mit einem Anschluss des zweiten Transistors (Q2) verbunden ist und ein erster gattergesteuerter Schalter (switch1) zwischen dem gemeinsamen Anschluss des ersten Transistors (Q1) und des zweiten Transistors (Q2) und einem punktiert gezeichneten Anschluss eines ersten Abgriffs der Sekundärseite des isolierten Transformators (101) angeordnet ist, welcher der erste gattergesteuerte Abgriff ist; und
ein zweiter gattergesteuerter Schalter (switch2) zwischen einem punktiert gezeichneten Anschluss eines zweiten Abgriffs der Sekundärseite des isolierten Transformators (101), welcher der zweite gattergesteuerte Abgriff ist, und der Gleichrichterschaltung angeordnet ist.

**4.** DC/DC-Schaltung für eine unterbrechungsfreie Stromversorgung nach Anspruch 2, wobei die steuerbaren Abgriffe ein erster und ein zweiter geschalteter Abgriff der Sekundärseite des isolierten Transformators (101) sind; ein erster getriggerter Schalter (switch1) zwischen einem gemeinsamen Anschluss des ersten Transistors (Q1) und des zweiten Transistors (Q2) und einem punktiert gezeichneten Anschluss der Sekundärseite des isolierten Transformators (101) angeordnet ist, d. h. zwischen dem ersten geschalteten Abgriff und dem zweiten geschalteten Abgriff; der erste getriggerte Schalter (switch1) konfiguriert ist, den ersten geschalteten Abgriff oder den zweiten geschalteten Abgriff zu schalten, so dass diese geschlossen sind; und eine erste Induktionsspule (L1) zwischen dem ersten geschalteten Abgriff und dem ersten getriggerten Schalter (switch1) angeordnet ist.

**5.** DC/DC-Schaltung für eine unterbrechungsfreie Stromversorgung nach einem der Ansprüche 1 bis 4, wobei: eine dritte Filterinduktionsspule (L3) und ein dritter Schalter (switch3) an der Batterie-(B)-Seite hinzugefügt sind, und wenn die Batterie (B) entladen wird, der dritte Schalter (switch3) geschlossen ist, um die dritte Filterinduktionsspule (L3) kurzzuschließen, und die Batterie den Bus durch eine Entladevorrichtung betreibt; und wenn die Batterie (B) geladen wird, der dritte Schalter (switch3) geöffnet ist, und die Filterinduktionsspule (L3) eine Rolle beim Filtern spielt.

**6.** DC/DC-Schaltung für eine unterbrechungsfreie Stromversorgung nach Anspruch 2, wobei mindestens:

A) eine Filterinduktionsspule (L3) und ein Schalter (switch4) zwischen einem punktiert gezeichneten Anschluss eines festen Abgriffs der Sekundärseite des isolierten Transformators (101) und einem gemeinsamen Anschluss der zwei Kondensatoren (C1, C2) hinzugefügt sind; und

B) die steuerbaren Abgriffe zwei Sätze geschalteter Abgriffe der Sekundärseite des isolierten Transformators (101) sind; der erste Satz der geschalteten Abgriffe einen ersten geschalteten Abgriff und einen zweiten geschalteten Abgriff umfasst; ein erster getriggerter Schalter (switch1) zwischen dem ersten geschalteten Abgriff, dem zweiten geschalteten Abgriff und dem zweiten Transistor Q2 angeordnet ist; und der erste geschaltete Abgriff oder der zweite geschaltete Abgriff durch den ersten getriggerten Schalter ausgewählt und aktiviert wird; der zweite Satz der geschalteten Abgriffe einen dritten geschalteten Abgriff und einen vierten geschalteten Abgriff umfasst; ein zweiter getriggerter Schalter (switch2) zwischen dem dritten geschalteten Abgriff, dem vierten geschalteten Abgriff und dem ersten Transistor Q1 angeordnet ist; und der dritte geschaltete Abgriff oder der vierte geschaltete Abgriff durch den zweiten getriggerten Schalter (switch2) ausgewählt und aktiviert wird; die Busseite eine Vollweggleichrichterschaltung ist, und die Verhältnisse der Windungen des Transformators (101) beim Laden und Entladen durch Umschalten der Verhältnisse der Windungen durch den ersten und den zweiten getriggerten Schalter (switch1, switch2) verändert werden; und eine erste Induktionsspule (L1) und ein dritter Schalter (switch3), die über die erste Induktionsspule (L1) parallel verbunden sind, zwischen einem punktiert gezeichneten Anschluss eines festen Abgriffs der Sekundärseite des isolierten Transformators (101) und dem Kondensator (C1) angeordnet sind; und die erste Induktionsspule (L1) zwischen dem ersten geschalteten Abgriff der Sekundärseite des isolierten Transformators (101) und dem zweiten Transistor (Q2) angeordnet ist, und eine zweite Induktionsspule (L2) zwischen einem vierten geschalteten Abgriff der Sekundärseite des isolierten Transformators (101) und dem ersten Schalter (switch1) angeordnet ist.

**7.** DC/DC-Schaltung für eine unterbrechungsfreie Stromversorgung nach Anspruch 1, wobei: die Gegentaktschaltung oder die Halbbrückenschaltung oder die Vollbrückenschaltung, die mit der Primärseite des isolierten Transformators (101) verbunden sind, als ein MOS-Transistor ausgeführt ist, und eine Ersatzdiode des MOS-Transistors als eine äquivalente Gleichrichter-Diode der Sekundärseite fungiert, wenn die bidirektionale DC/DC-Schaltung (8) Strom aus dem Bus zieht, um die Batterie (B) zu laden.

**8.** DC/DC-Schaltung für eine unterbrechungsfreie Stromversorgung nach Anspruch 1, wobei die bidirektionale DC/DC-Schaltung (8) Folgendes umfasst:

einen isolierten Transformator (101); eine erste Auswähleinheit, eine erste Zerhackereinheit und eine erste Gleichrichtereinheit, die an einer Primärseite des isolierten Transformators (101) angeordnet sind; und eine zweite Auswähleinheit, eine zweite Zerhackereinheit und eine zweite Gleichrichtereinheit, die an einer Sekundärseite des isolierten Transformators (101) angeordnet sind; und

wobei im Netzbetrieb die zweite Auswähleinheit die zweite Zerhackereinheit zum Betrieb auswählt und die erste Auswähleinheit die erste Gleichrichtereinheit zum Betrieb auswählt; und wenn das Netz anormal wird, die erste Auswähleinheit die erste Zerhackereinheit zum Betrieb auswählt und die zweite Auswähleinheit die zweite Gleichrichtereinheit zum Betrieb auswählt.

9. DC/DC-Schaltung für eine unterbrechungsfreie Stromversorgung nach Anspruch 8, wobei es mehrere steuerbare Abgriffe an der Primärseite und/oder an der Sekundärseite des isolierten Transformators (101) gibt und die erste Zerhackereinheit und die erste Gleichrichtereinheit jeweils mit verschiedenen steuerbaren Abgriffen an der Primärseite des isolierten Transformators (101) verbunden sind und/oder die zweite Zerhackereinheit und die zweite Gleichrichtereinheit jeweils mit verschiedenen steuerbaren Abgriffen an der Sekundärseite des isolierten Transformators (101) verbunden sind;

die erste Zerhackereinheit und die zweite Zerhackereinheit eine Gegentaktzerhackereinheit, eine Vollbrückenzerhackereinheit oder eine Halbbrückenzerhackereinheit sind;

die erste Gleichrichtereinheit und die zweite Gleichrichtereinheit eine Vollbrückengleichrichtereinheit, eine Vollweggleichrichtereinheit, eine spannungsverdoppelnde Gleichrichtereinheit oder eine stromverdoppelnde Gleichrichtereinheit sind;

die erste Auswähleinheit und die zweite Auswähleinheit ein Relais und/oder ein Halbleiterschalter sind; und

wenn die erste Auswähleinheit und die zweite Auswähleinheit ein Relais sind, das Relais mindestens ein Relais mit einpoligem Einschaltkontakt, ein Relais mit einpoligem Wechselkontakt oder ein Relais mit zweipoligem Wechselkontakt umfasst.

10. DC/DC-Schaltung für eine unterbrechungsfreie Stromversorgung nach Anspruch 8, wobei mindestens:

A) die bidirektionale DC/DC-Schaltung (8) weiterhin eine Strom-Gegeninduktivität oder einen Hall-Sensor umfasst, die an der Primärseite und/oder an der Sekundärseite des isolierten Transformators (101) angeordnet sind, um einen Strom der Primärseite und/oder der Sekundärseite des isolierten Transformators (101) abzutasten; und

die bidirektionale DC/DC-Schaltung (8) weiterhin eine Filterinduktionsspule (L3) umfasst, die an der Primärseite und/oder an der Sekundärseite des isolierten Transformators (101) angeordnet ist; und

B) die erste Auswähleinheit ein erstes Relais mit einpoligem Einschaltkontakt (RLY1) umfasst, die zweite Auswähleinheit ein zweites Relais mit einpoligem Wechselkontakt (RLY2) umfasst, die erste Zerhackereinheit einen ersten Transistor (Q1) und einen zweiten Transistor (Q2) umfasst, die zweite Zerhackereinheit einen dritten Transistor (Q3) und einen vierten Transistor (Q4) umfasst, die erste Gleichrichtereinheit eine erste Diode (D1) und eine zweite Diode (D2) umfasst und die zweite Zerhackereinheit eine dritte Diode (D3) und eine vierte Diode (D4) umfasst und die bidirektionale DC/DC-Schaltung (8) weiterhin eine erste Filterinduktionsspule (L1), die an der Primärseite des isolierten Transformators (101) angeordnet ist, eine zweite Filterinduktionsspule (L2), die an der Sekundärseite des isolierten Transformators (101) angeordnet ist, und eine Strom-Gegeninduktivität (T2) umfasst, die an der Primärseite des isolierten Transformators (101) angeordnet ist, und

der erste Abgriff und der dritte Abgriff der Primärseite des isolierten Transformators (101) weiterhin jeweils mit einer Kathode der ersten Diode (D1) und mit einer Kathode der zweiten Diode (D2) über die Strom-Gegeninduktivität (T2) verbunden sind, und eine Anode der ersten Diode (D1) und eine Anode der zweiten Diode (D2) zusammen mit der Kathode der Batterie (B) über die erste Filterinduktionsspule (L1) verbunden sind; und ein dritter Abgriff, der ein zentraler Abgriff ist, der Sekundärseite des isolierten Transformators (101) mit einem positiven Bus verbunden ist, ein erster Abgriff und ein fünfter Abgriff der Sekundärseite des isolierten Transformators (101) jeweils mit einer Kathode der dritten Diode (D3) und mit einer Kathode der vierten Diode (D4) verbunden sind, eine Anode der dritten Diode (D3) und eine Anode der vierten Diode (D4) zusammen mit einem ersten Auswählabgriff des zweiten Relais (RLY2) über die zweite Filterinduktionsspule (L2) verbunden sind, ein zweiter Abgriff und ein vierter Abgriff der Sekundärseite des isolierten Transformators (101) jeweils mit einem ersten Anschluss des dritten Transistors (Q3) und mit einem ersten Anschluss des vierten Transistors (Q4) verbunden sind, ein zweiter Anschluss des dritten Transistors (Q3) und ein zweiter Anschluss des vierten Transistors (Q4) zusammen mit einem zweiten Auswählabgriff des zweiten Relais verbunden sind und ein beweglicher Abgriff des zweiten Relais (RLY2) mit einem negativen Bus verbunden ist.

11. DC/DC-Schaltung für eine unterbrechungsfreie Stromversorgung nach Anspruch 8, wobei die erste Auswähleinheit ein erstes Relais mit einpoligem Einschaltkontakt (RLY1-1) und ein drittes Relais (RLY1-2) umfasst, die zweite Auswähleinheit ein zweites Relais mit einpoligem Wechselkontakt (RLY2) umfasst, die erste Zerhackereinheit einen ersten Transistor (Q1) und einen zweiten Transistor (Q2) umfasst, die zweite Zerhackereinheit einen dritten Transistor (Q3) und einen vierten Transistor (Q4) umfasst, die erste Gleichrichtereinheit eine erste Diode (D1) und eine zweite Diode (D2) umfasst und die zweite Gleichrichtereinheit eine dritte Diode (D3) und eine vierte Diode (D4) umfasst und die bidirektionale DC/DC-Schaltung (8) weiterhin eine erste Filterinduktionsspule (L1), die an der Primärseite des isolierten Transformators (101) angeordnet ist, eine zweite Filterinduktionsspule (L2), die an der Sekundärseite des isolierten Transformators (101) angeordnet ist, und eine Strom-Gegeninduktivität (T2) umfasst, die an der Primärseite des isolierten Transformators (101) angeordnet ist, und

eine Anode der Batterie (B) mit einem zweiten Abgriff, der ein zentraler Abgriff ist, der Primärseite des isolierten Transformators (101) verbunden ist, eine Kathode der Batterie (B) jeweils mit einem zweiten Anschluss des ersten Transistors (Q1) und mit einem zweiten Anschluss des zweiten Transistors (Q2) verbunden ist, ein erster Anschluss des ersten Transistors (Q1) mit einem ersten Abgriff, der ein punktiert gezeichneter Anschluss ist, der Primärseite des isolierten Transformators (101) über das erste Relais (RLY1-1) verbunden ist, ein erster Anschluss des zweiten Transistors (Q2) mit einem dritten Abgriff, der ein nicht punktiert gezeichneter Anschluss ist, der Primärseite des isolierten Transformators (101) über das dritte Relais (RLY1-2) verbunden ist, der erste Abgriff und der dritte Abgriff der Primärseite des isolierten Transformators (101) weiterhin jeweils mit einer Kathode der ersten Diode (D1) und mit einer Kathode der zweiten Diode (D2) über die Strom-Gegeninduktivität (T2) verbunden sind, und eine Anode der ersten Diode (D1) und eine Anode der zweiten Diode (D2) zusammen mit der Kathode der Batterie (B) über die erste Filterinduktionsspule (L1) verbunden sind; und ein dritter Abgriff, der ein zentraler Abgriff ist, der Sekundärseite des isolierten Transformators (101) mit einem positiven Bus verbunden ist, ein erster Abgriff und ein fünfter Abgriff der Sekundärseite des isolierten Transformators (101) jeweils mit einer Kathode der dritten Diode (D3) und mit einer Kathode der vierten Diode (D4) verbunden sind, eine Anode der dritten Diode (D3) und eine Anode der vierten Diode (D4) zusammen mit einem ersten Auswählabgriff des zweiten Relais über die zweite Filterinduktionsspule (L2) verbunden sind, ein zweiter Abgriff und ein vierter Abgriff der Sekundärseite des isolierten Transformators (101) jeweils mit einem ersten Anschluss des dritten Transistors (Q3) und mit einem ersten Anschluss des vierten Transistors (Q4) verbunden sind, ein zweiter Anschluss des dritten Transistors (Q3) und ein zweiter Anschluss des vierten Transistors (Q4) zusammen mit einem zweiten Auswählabgriff des zweiten Relais (RLY2) verbunden sind und ein beweglicher Abgriff des zweiten Relais (RLY2) mit einem negativen Bus verbunden ist.

12. DC/DC-Schaltung für eine unterbrechungsfreie Stromversorgung nach Anspruch 8, wobei die erste Auswähleinheit ein erstes Relais mit einpoligem Einschaltkontakt umfasst, die zweite Auswähleinheit drei Schalter, d. h. einen ersten Schalter (switch1), einen zweiten Schalter (switch2) und einen dritten Schalter (switch3), umfasst, die erste Zerhackereinheit einen ersten Transistor (Q1) und einen zweiten Transistor (Q2) umfasst, die zweite Zerhackereinheit eine Halbbrückenzerhackereinheit ist, die erste Gleichrichtereinheit eine erste Diode (D1) und eine zweite Diode (D2) umfasst und die zweite Gleichrichtereinheit eine Vollbrückengleichrichtereinheit ist und die bidirektionale DC/DC-Schaltung (8) weiterhin eine erste Filterinduktionsspule (L1), die an der Primärseite des isolierten Transformators (101) angeordnet ist, und eine Strom-Gegeninduktivität (T2) umfasst, die an der Primärseite des isolierten Transformators (101) angeordnet ist, und

eine Anode der Batterie (B) mit einem zweiten Abgriff, der ein zentraler Abgriff ist, der Primärseite des isolierten Transformators (101) verbunden ist, eine Kathode der Batterie (B) mit einem zweiten Anschluss des ersten Transistors (Q1) und einem zweiten Anschluss des zweiten Transistors (Q2) über das erste Relais (RLY1-1) verbunden ist, ein erster Anschluss des ersten Transistors (Q1) und ein erster Anschluss des zweiten Transistors (Q2) jeweils mit einem ersten Abgriff, der ein punktiert gezeichneter Anschluss ist, und mit einem dritten Abgriff, der ein nicht punktiert gezeichneter Anschluss ist, der Primärseite des isolierten Transformators (101) verbunden sind, der erste Abgriff und der dritte Abgriff der Primärseite des isolierten Transformators (101) weiterhin jeweils mit einer Kathode der ersten Diode (D1) und mit einer Kathode der zweiten Diode (D2) über die Strom-Gegeninduktivität (T2) verbunden sind und eine Anode der ersten Diode (D1) und eine Anode der zweiten Diode (D2) zusammen mit der Kathode der Batterie (B) über die erste Filterinduktionsspule (L1) verbunden sind; und die Sekundärseite des isolierten Transformators (101) eine duale Busstruktur ist, es insgesamt vier Abgriffe an der Sekundärseite des isolierten Transformators (101) gibt, und der dritte Abgriff mit der Kathode eines zweiten Bus-Kondensators (C2) verbunden ist und die Anode eines dritten Bus-Kondensators (C3) in der zweiten Gleichrichtereinheit, eine dritte Diode (D3), eine vierte Diode (D4), eine fünfte Diode (D5) und eine sechste Diode (D6) eine Vollbrückengleichrichterbrücke bilden und zwei Eingänge der Vollbrückengleichrichterbrücke jeweils mit dem ersten Abgriff und mit dem vierten Abgriff der Sekundärseite des isolierten Transformators (101) über den ersten Schalter (switch1) und den dritten Schalter (switch3) verbunden sind, ein erster Ausgang der Vollbrückengleichrichterbrücke mit der Anode des zweiten Bus-Kondensators (C2) über eine zweite Filterinduktionsspule (L2) verbunden ist und ein zweiter Ausgang der Vollbrückengleichrichterbrücke mit der Kathode des dritten Bus-Kondensators (C3) über die dritte Filterinduktionsspule (L3) verbunden ist, in der zweiten Zerhackereinheit ein erster Anschluss eines dritten Transistors (Q3) mit der Anode des zweiten Bus-Kondensators (C2) verbunden ist, ein zweiter Anschluss eines vierten Transistors (Q4) mit der Kathode des dritten Bus-Kondensators (C3) verbunden ist und ein zweiter Anschluss des dritten Transistors (Q3) und ein erster Anschluss des vierten Transistors (Q4) zusammen mit dem zweiten Abgriff der Sekundärseite des isolierten Transformators (101) über den zweiten Schalter (switch2) verbunden sind.

13. DC/DC-Schaltung für eine unterbrechungsfreie Stromversorgung nach Anspruch 8, wobei es insgesamt fünf Abgriffe an der Primärseite des isolierten Transformators (101) gibt, wobei ein dritter Abgriff, der ein zentraler Abgriff ist, mit der Anode der Batterie (B) verbunden ist, die erste Auswähleinheit ein erstes Relais (RLY1-1) und ein zweites Relais (RLY2) umfasst, die ein Relais mit einpoligem Einschaltkontakt sind, in der ersten Zerhackereinheit die Kathode der Batterie (B) jeweils mit einem zweiten Anschluss eines ersten Transistors (Q1) und mit einem zweiten Anschluss eines zweiten Transistors (Q2) über das erste Relais (RLY1-1) verbunden ist und ein erster Anschluss des ersten Transistors (Q1) und ein erster Anschluss des zweiten Transistors (Q2) jeweils mit einem zweiten Abgriff und mit einem vierten Abgriff der Primärseite des isolierten Transformators (101) verbunden sind, in der ersten Gleichrichtereinheit die Kathode der Batterie (B) jeweils mit der Anode der ersten Diode (D1) und mit der Anode der zweiten Diode (D2) über das zweite Relais (RLY2) und die erste Filterinduktionsspule (L1) verbunden ist und die Kathode der ersten Diode (D1) und die Kathode der zweiten Diode (D2) jeweils mit einem ersten Abgriff und mit einem fünften Abgriff der Primärseite des isolierten Transformators (101) über eine Strom-Gegeninduktivität (T2) verbunden sind, ein spannungsstabilisierender Kondensator (C1) parallel zwischen der Anode der Batterie (B) und der Kathode der Batterie (B) verbunden ist, die zweite Auswähleinheit ein drittes Relais (RLY1-2) umfasst, das ein Relais mit einpoligem Einschaltkontakt ist, in der zweiten Gleichrichtereinheit eine dritte Diode (D3), eine vierte Diode (D4), eine fünfte Diode (D5) und eine sechste Diode (D6) eine Vollbrücken-Diodengleichrichterbrücke bilden und zwei Eingänge der Gleichrichterbrücke jeweils mit dem ersten Abgriff, welcher der punktiert gezeichnete Anschluss ist, und mit dem dritten Abgriff, welcher der nicht punktiert gezeichnete Anschluss ist, der Sekundärseite des isolierten Transformators (101) verbunden sind, ein erster Ausgang der Gleichrichterbrücke mit der Anode eines zweiten Bus-Kondensators (C2) über die zweite Filterinduktionsspule (L2) verbunden ist und ein zweiter Ausgang der Gleichrichterbrücke mit der Kathode eines dritten Bus-Kondensators (C3) über die dritte Filterinduktionsspule (L3) verbunden ist, in der zweiten Zerhackereinheit der erste Anschluss des dritten Transistors (Q3) mit der Anode des zweiten Bus-Kondensators verbunden ist, der zweite Anschluss des vierten Transistors (Q4) mit der Kathode des dritten Bus-Kondensators (C3) verbunden ist, der zweite Anschluss des dritten Transistors (Q3) und der erste Anschluss des vierten Transistors (Q4) zusammen mit dem ersten Abgriff der Sekundärseite des isolierten Transformators (101) über das dritte Relais (RLY1-2) verbunden sind und der zweite Abgriff, welcher der zentrale Abgriff ist, des isolierten Transformators (101) mit der Kathode des zweiten Bus-Kondensators (C2) und mit der Anode des dritten Bus-Kondensators (C3) verbunden ist.

14. USV, wobei die USV die DC/DC-Schaltung nach den Ansprüchen 1 bis 13 umfasst.

**Revendications**

1. Circuit CC/CC pour une alimentation sans coupure, le circuit CC/CC pour une alimentation sans coupure étant un circuit CC/CC bidirectionnel (8) branché entre un bus et une batterie (B) ; et
en mode secteur, le circuit CC/CC bidirectionnel (8) s'alimentant à partir du bus et chargeant la batterie (B) ; et
quand le secteur devient anormal, le circuit CC/CC bidirectionnel (8) tirant sur la batterie (B) et alimentant le bus,
le circuit CC/CC bidirectionnel (8) comprenant un transformateur isolé (101), et un côté primaire du transformateur isolé (101) étant branché à un circuit symétrique ou un circuit demi-pont ou un circuit en pont complet ; et un côté secondaire du transformateur isolé (101) étant branché à un circuit symétrique ou un circuit demi-pont ou un circuit en pont complet ;
**caractérisé en ce que** :

le transformateur isolé (101) est pourvu de multiples prises contrôlables ; et le circuit CC/CC bidirectionnel (8) a le rapport de spires commuté en sélectionnant une prise contrôlable du côté primaire et/ou du côté secondaire du transformateur isolé (101) ; et
une anode de la batterie (B) est branchée à une deuxième prise, qui est une prise centrale, du côté primaire du transformateur isolé (101), une cathode de la batterie (B) est branchée par le biais d'une bobine de filtrage (L1) à une première unité de redressement (D1, D2), et est respectivement branchée à une deuxième borne d'un premier transistor (Q1) et une deuxième borne d'un deuxième transistor (Q2) par le biais d'un premier relais, une première borne du premier transistor (Q1) et une première borne du deuxième transistor (Q2) sont respectivement branchées à une première prise, qui est une borne pointée, et une troisième prise, qui est une borne non pointée, du côté primaire du transformateur isolé (101), de telle sorte que seul le transformateur isolé (101) est utilisé à la fois pour les modes charge et décharge de la batterie (B), et qu'une première unité de hachage, comprenant le premier transistor (Q1) et le deuxième transistor (Q2), utilisée en mode décharge est totalement indépendante de la première unité de redressement utilisée en mode charge.

2. Circuit CC/CC pour une alimentation sans coupure selon la revendication 1, dans lequel le côté secondaire du transformateur isolé (101) est branché à un circuit redresseur et les deux bornes du circuit redresseur sont simultanément branchées en parallèle à des premier et deuxième transistors (Q1, Q2) et à un condensateur (C1, C2).

3. Circuit CC/CC pour une alimentation sans coupure selon la revendication 2, dans lequel les prises contrôlables sont deux prises commandées par porte du côté secondaire du transformateur isolé (101) ;
la première prise commandée par porte est branchée au circuit redresseur ou à une borne commune des premier et deuxième transistors (Q1, Q2) ;
la deuxième prise commandée par porte est branchée à la borne commune des premier et deuxième transistors (Q1, Q2) ou au circuit redresseur ;
les premier et deuxième transistors (Q1, Q2) sont des structures demi-pont ; et une borne du premier transistor (Q1) est branchée à une borne positive d'un bus positif, une borne du deuxième transistor (Q2) est branchée à un bus négatif, le premier transistor (Q1) est branché à une borne du deuxième transistor (Q2), et un premier commutateur commandé par porte (switch1) est disposé entre la borne commune du premier transistor (Q1) et du deuxième transistor (Q2) et une borne pointée d'une première prise du côté secondaire du transformateur isolé (101), qui est la première prise commandée par porte ; et
un deuxième commutateur commandé par porte (switch2) est disposé entre une borne pointée d'une deuxième prise du côté secondaire du transformateur isolé (101), qui est la deuxième prise commandée par porte, et le circuit redresseur.

4. Circuit CC/CC pour une alimentation sans coupure selon la revendication 2, dans lequel les prises contrôlables sont des première et deuxième prises commutées du côté secondaire du transformateur isolé (101) ;
un premier commutateur à bascule (switch1) est disposé entre une borne commune du premier transistor (Q1) et du deuxième transistor (Q2) et une borne pointée du côté secondaire du transformateur isolé (101), autrement dit la première prise commutée et la deuxième prise commutée ;
le premier commutateur à bascule (switch1) est configuré pour commuter la première prise commutée ou la deuxième prise commutée pour qu'elle soit fermée ; et
une première bobine d'induction (L1) est disposée entre la première prise commutée et le premier commutateur à bascule (switch1).

5. Circuit CC/CC pour une alimentation sans coupure selon l'une quelconque des revendications 1 à 4, dans lequel :

une troisième bobine de filtrage (L3) et un troisième commutateur (switch3) sont ajoutés du côté batterie (B), et quand la batterie (B) est déchargée, le troisième commutateur (switch3) est fermé pour avoir la troisième bobine de filtrage (L3) court-circuitée, et la batterie alimente le bus par le biais d'un déchargeur ; et quand la batterie (B) est chargée, le troisième commutateur (switch3) est ouvert, et la bobine de filtrage (L3) joue un rôle de filtrage.

6. Circuit CC/CC pour une alimentation sans coupure selon la revendication 2, dans lequel :

A) une bobine de filtrage (L3) et un commutateur (switch4) sont ajoutés entre une borne pointée d'une prise fixe du côté secondaire du transformateur isolé (101) et une borne commune des deux condensateurs (C1, C2) ; et/ou
B) les prises contrôlables sont deux ensembles de prises commutées du côté secondaire du transformateur isolé (101) ;

le premier ensemble de prises commutées comprend une première prise commutée et une deuxième prise commutée ; un premier commutateur à bascule (switch1) est disposé entre la première prise commutée, la deuxième prise commutée et le deuxième transistor Q2 ; et la première prise commutée ou la deuxième prise commutée est sélectionnée et activée par le premier commutateur à bascule ;
le deuxième ensemble de prises commutées comprend une troisième prise commutée et une quatrième prise commutée ; un deuxième commutateur à bascule (switch2) est disposé entre la troisième prise commutée, la quatrième prise commutée et le premier transistor Q1 ; et la troisième prise commutée ou la quatrième prise commutée est sélectionnée et activée par le deuxième commutateur à bascule (switch2) ;

le côté bus est un circuit redresseur à double alternance, et les rapports de spires du transformateur (101) lors de la charge et de la décharge sont modifiés en commutant les rapports de spires par le biais des premier et deuxième commutateurs à bascule (switch1, switch2) ; et

une première bobine d'induction (L1) et un troisième commutateur (switch3) branchés en parallèle aux bornes de la première bobine d'induction (L1) sont disposés entre une borne pointée d'une prise fixe du côté secondaire du transformateur isolé (101) et le condensateur (C1); et

la première bobine d'induction (L1) est disposée entre la première prise commutée du côté secondaire du transformateur isolé (101) et le deuxième transistor (Q2), et une deuxième bobine d'induction (L2) est disposée entre une quatrième prise commutée du côté secondaire du transformateur isolé (101) et le premier commutateur (switch1).

7. Circuit CC/CC pour une alimentation sans coupure selon la revendication 1, dans lequel :

le circuit symétrique ou le circuit demi-pont ou le circuit en pont complet branché du côté primaire du transformateur isolé (101) est mis en oeuvre sous la forme d'un transistor MOS, et une diode équivalente du transistor MOS agit comme une diode de redressement équivalente du côté secondaire quand le circuit CC/CC bidirectionnel (8) s'alimente à partir du bus pour charger la batterie (B).

8. Circuit CC/CC pour une alimentation sans coupure selon la revendication 1, le circuit CC/CC bidirectionnel (8) comprenant :

un transformateur isolé (101) ;

une première unité de sélection, une première unité de hachage et une première unité de redressement disposées sur un côté primaire du transformateur isolé (101) ; et

une deuxième unité de sélection, une deuxième unité de hachage et une deuxième unité de redressement disposées sur un côté secondaire du transformateur isolé (101) ; et

en mode secteur, la deuxième unité de sélection sélectionne la deuxième unité de hachage pour fonctionnement, et la première unité de sélection sélectionne la première unité de redressement pour fonctionnement ; et quand le secteur devient anormal, la première unité de sélection sélectionne la première unité de hachage pour fonctionnement, et la deuxième unité de sélection sélectionne la deuxième unité de redressement pour fonctionnement.

9. Circuit CC/CC pour une alimentation sans coupure selon la revendication 8, dans lequel il y a de multiples prises contrôlables du côté primaire et/ou du côté secondaire du transformateur isolé (101), et la première unité de hachage et la première unité de redressement sont respectivement branchées à différentes prises contrôlables du côté primaire du transformateur isolé (101) et/ou la deuxième unité de hachage et la deuxième unité de redressement sont respectivement branchées à différentes prises contrôlables du côté secondaire du transformateur isolé (101) ;

la première unité de hachage et la deuxième unité de hachage sont des unités de hachage symétriques, des unités de hachage en pont complet ou des unités de hachage demi-pont ;

la première unité de redressement et la deuxième unité de redressement sont des unités de redressement en pont complet, des unités de redressement à double alternance, des unités de redressement à doublage de tension ou des unités de redressement à doublage de courant ;

la première unité de sélection et la deuxième unité de sélection sont des relais et/ou des commutateurs à semiconducteurs ; et

quand la première unité de sélection et la deuxième unité de sélection sont des relais, le relais comprend au moins un relais unipolaire unidirectionnel, un relais unipolaire bidirectionnel ou un relais bipolaire bidirectionnel.

10. Circuit CC/CC pour une alimentation sans coupure selon la revendication 8, dans lequel :

A) le circuit CC/CC bidirectionnel (8) comprend en outre une bobine d'induction mutuelle de courant ou un capteur à effet Hall disposé du côté primaire et/ou du côté secondaire du transformateur isolé (101) pour échantillonner le courant du côté primaire et/ou du côté secondaire du transformateur isolé (101) ; et

le circuit CC/CC bidirectionnel (8) comprend en outre une bobine de filtrage (L3) disposée du côté primaire et/ou du côté secondaire du transformateur isolé (101) ;

et/ou

B) la première unité de sélection comprend un premier relais unipolaire unidirectionnel (RLY1), la deuxième unité de sélection comprend un deuxième relais unipolaire bidirectionnel (RLY2), la première unité de hachage comprend un premier transistor (Q1) et un deuxième transistor (Q2), la deuxième unité de hachage comprend un troisième transistor (Q3) et un quatrième transistor (Q4), la première unité de redressement comprend une première diode (D1) et une deuxième diode (D2), et la deuxième unité de hachage comprend une troisième diode (D3) et une quatrième diode (D4), et le circuit CC/CC bidirectionnel (8) comprend en outre une première bobine de filtrage (L1) disposée du côté primaire du transformateur isolé (101), une deuxième bobine de filtrage (L2) disposée du côté secondaire du transformateur isolé (101), et une bobine d'induction mutuelle de courant (T2), disposée du côté primaire du transformateur isolé (101), et

la première prise et la troisième prise du côté primaire du transformateur isolé (101) sont en outre respectivement branchées à une cathode de la première diode (D1) et une cathode de la deuxième diode (D2) par le biais de la bobine d'induction mutuelle de courant (T2), et une anode de la première diode (D1) et une anode de la deuxième diode (D2) sont conjointement branchées à la cathode de la batterie (B) par le biais de la première bobine de filtrage (L1) ; et une troisième prise, qui est une prise centrale, du côté secondaire du transformateur isolé (101) est branchée à un bus positif, une première prise et une cinquième prise du côté secondaire du transformateur isolé (101) sont respectivement branchées à une cathode de la troisième diode (D3) et une cathode de la quatrième diode (D4), une anode de la troisième diode (D3) et une anode de la quatrième diode (D4) sont conjointement branchées à une première prise de sélection du deuxième relais (RLY2) par le biais de la deuxième bobine de filtrage (L2), une deuxième prise et une quatrième prise du côté secondaire du transformateur isolé (101) sont respectivement branchées à une première borne du troisième transistor (Q3) et une première borne du quatrième transistor (Q4), une deuxième borne du troisième transistor (Q3) et une deuxième borne du quatrième transistor (Q4) sont conjointement branchées à une deuxième prise de sélection du deuxième relais, et une prise mobile du deuxième relais (RLY2) est branchée à un bus négatif.

11. Circuit CC/CC pour une alimentation sans coupure selon la revendication 8, dans lequel la première unité de sélection comprend un premier relais (RLY1-1) et un troisième relais (RLY1-2) unipolaires unidirectionnels, la deuxième unité de sélection comprend un deuxième relais unipolaire bidirectionnel (RLY2), la première unité de hachage comprend un premier transistor (Q1) et un deuxième transistor (Q2), la deuxième unité de hachage comprend un troisième transistor (Q3) et un quatrième transistor (Q4), la première unité de redressement comprend une première diode (D1) et une deuxième diode (D2), et la deuxième unité de redressement comprend une troisième diode (D3) et une quatrième diode (D4), et le circuit CC/CC bidirectionnel (8) comprend en outre une première bobine de filtrage (L1) disposée du côté primaire du transformateur isolé (101), une deuxième bobine de filtrage (L2) disposée du côté secondaire du transformateur isolé (101), et une bobine d'induction mutuelle de courant (T2) disposée du côté primaire du transformateur isolé (101), et

une anode de la batterie (B) est branchée à une deuxième prise, qui est une prise centrale, du côté primaire du transformateur isolé (101), une cathode de la batterie (B) est respectivement branchée à une deuxième borne du premier transistor (Q1) et une deuxième borne du deuxième transistor (Q2), une première borne du premier transistor (Q1) est branchée à une première prise, qui est une borne pointée, du côté primaire du transformateur isolé (101) par le biais du premier relais (RLY1-1), une première borne du deuxième transistor (Q2) est branchée à une troisième prise, qui est une borne non pointée, du côté primaire du transformateur isolé (101) par le biais du troisième relais (RLY1-2), la première prise et la troisième prise du côté primaire du transformateur isolé (101) sont en outre respectivement branchées à une cathode de la première diode (D1) et une cathode de la deuxième diode (D2) par le biais de la bobine d'induction mutuelle de courant (T2), et une anode de la première diode (D1) et une anode de la deuxième diode (D2) sont conjointement branchées à la cathode de la batterie (B) par le biais de la première bobine de filtrage (L1) ; et une troisième prise, qui est une prise centrale, du côté secondaire du transformateur isolé (101) est branchée à un bus positif, une première prise et une cinquième prise du côté secondaire du transformateur isolé (101) sont respectivement branchées à une cathode de la troisième diode (D3) et une cathode de la quatrième diode (D4), une anode de la troisième diode (D3) et une anode de la quatrième diode (D4) sont conjointement branchées à une première prise de sélection du deuxième relais par le biais de la deuxième bobine de filtrage (L2), une deuxième prise et une quatrième prise du côté secondaire du transformateur isolé (101) sont respectivement branchées à une première borne du troisième transistor (Q3) et une première borne du quatrième transistor (Q4), une deuxième borne du troisième transistor (Q3) et une deuxième borne du quatrième transistor (Q4) sont conjointement branchées à une deuxième prise de sélection du deuxième relais (RLY2), et une prise mobile du deuxième relais (RLY2) est branchée à un bus négatif.

12. Circuit CC/CC pour une alimentation sans coupure selon la revendication 8, dans lequel la première unité de sélection comprend un premier relais unipolaire unidirectionnel, la deuxième unité de sélection comprend trois commutateurs, c.-à-d. un premier commutateur (switch1), un deuxième commutateur (switch2) et un troisième commutateur (switch3), la première unité de hachage comprend un premier transistor (Q1) et un deuxième transistor (Q2), la deuxième unité de hachage est une unité de hachage demi-pont, la première unité de redressement comprend une première diode (D1) et une deuxième diode (D2), et la deuxième unité de redressement est une unité de redressement en pont complet, et le circuit CC/CC bidirectionnel (8) comprend en outre une première bobine de filtrage (L1) disposée du côté primaire du transformateur isolé (101), et une bobine d'induction mutuelle de courant (T2) disposée du côté primaire du transformateur isolé (101), et

une anode de la batterie (B) est branchée à une deuxième prise, qui est une prise centrale, du côté primaire du transformateur isolé (101), une cathode de la batterie (B) est branchée à une deuxième borne du premier transistor (Q1) et une deuxième borne du deuxième transistor (Q2) par le biais du premier relais (RLY1-1), une première borne du premier transistor (Q1) et une première borne du deuxième transistor (Q2) sont respectivement branchées à une première prise, qui est une borne pointée, et une troisième prise, qui est une borne non pointée, du côté primaire du transformateur isolé (101), la première prise et la troisième prise du côté primaire du transformateur isolé (101) sont en outre respectivement branchées à une cathode de la première diode (D1) et une cathode de la deuxième diode (D2) par le biais de la bobine d'induction mutuelle de courant (T2), et une anode de la première diode (D1) et une anode de la deuxième diode (D2) sont conjointement branchées à la cathode de la batterie (B) par le biais de la première bobine de filtrage (L1) ; et le côté secondaire du transformateur isolé (101) est une structure à double bus, il y a quatre prises au total du côté secondaire du transformateur isolé (101), et la troisième prise est branchée à la cathode d'un deuxième condensateur de bus (C2) et l'anode d'un troisième condensateur de bus (C3), dans la deuxième unité de redressement, une troisième diode (D3), une quatrième diode (D4), une cinquième diode (D5) et une sixième diode (D6) constituent un pont redresseur en pont complet, et deux entrées du pont redresseur en pont complet sont respectivement branchées à la première prise et la quatrième prise du côté secondaire du transformateur isolé (101) par le biais du premier commutateur (switch1) et du troisième commutateur (switch3), une première sortie du pont redresseur en pont complet est branchée à l'anode du deuxième condensateur de bus (C2) par le biais d'une deuxième bobine de filtrage (L2), et une deuxième sortie du pont redresseur en pont complet est branchée à la cathode du troisième condensateur de bus (C3) par le biais de la troisième bobine de filtrage (L3), dans la deuxième unité de hachage, une première borne d'un troisième transistor (Q3) est branchée à l'anode du deuxième condensateur de bus (C2), une deuxième borne d'un quatrième transistor (Q4) est branchée à la cathode du troisième condensateur de bus (C3), et une deuxième borne du troisième transistor (Q3) et une première borne du quatrième transistor (Q4) sont conjointement branchées à la deuxième prise du côté secondaire du transformateur isolé (101) par le biais du deuxième commutateur (switch2).

13. Circuit CC/CC pour une alimentation sans coupure selon la revendication 8, dans lequel il y a cinq prises au total du côté primaire du transformateur isolé (101), où une troisième prise, qui est une prise centrale, est branchée à l'anode de la batterie (B), la première unité de sélection comporte un premier relais (RLY1-1) et un deuxième relais (RLY2) qui sont des relais unipolaires unidirectionnels, dans la première unité de hachage, la cathode de la batterie (B) est respectivement branchée à une deuxième borne d'un premier transistor (Q1) et une deuxième borne d'un deuxième transistor (Q2) par le biais du premier relais (RLY1-1), et une première borne du premier transistor (Q1) et une première borne du deuxième transistor (Q2) sont respectivement branchées à une deuxième prise et une quatrième prise du côté primaire du transformateur isolé (101), dans la première unité de redressement, la cathode de la batterie (B) est respectivement branchée à l'anode de la première diode (D1) et l'anode de la deuxième diode (D2) par le biais du deuxième relais (RLY2) et de la première bobine de filtrage (L1), et la cathode de la première diode (D1) et la cathode de la deuxième diode (D2) sont respectivement branchées à une première prise et une cinquième prise du côté primaire du transformateur isolé (101) par le biais d'une bobine d'induction mutuelle de courant (T2), un condensateur stabilisateur de tension (C1) est branché en parallèle entre l'anode de la batterie (B) et la cathode de la batterie (B), la deuxième unité de sélection comporte un troisième relais (RLY1-2) qui est un relais unipolaire unidirectionnel, dans la deuxième unité de redressement, une troisième diode (D3), une quatrième diode (D4), une cinquième diode (D5) et une sixième diode (D6) constituent un pont redresseur en pont complet, et deux entrées du pont redresseur sont respectivement branchées à la première prise, qui est la borne pointée, et la troisième prise, qui est la borne non pointée, du côté secondaire du transformateur isolé (101), une première sortie du pont redresseur est branchée à l'anode d'un deuxième condensateur de bus (C2) par le biais de la deuxième bobine de filtrage (L2), et une deuxième sortie du pont redresseur est branchée à la cathode d'un troisième condensateur de bus (C3) par le biais de la troisième bobine de filtrage (L3), dans la deuxième unité de hachage, la première borne du troisième transistor (Q3) est branchée à l'anode du deuxième condensateur de bus, la deuxième borne du quatrième transistor (Q4) est branchée à la cathode du troisième condensateur de bus (C3), la deuxième borne du troisième transistor (Q3) et la première borne du quatrième transistor (Q4) sont conjointement branchées à la première prise du côté secondaire du transformateur isolé (101) par le biais du troisième relais (RLY1-2), et la deuxième prise, qui est la prise centrale, du transformateur isolé (101) est branchée à la cathode du deuxième condensateur de bus (C2) et l'anode du troisième condensateur de bus (C3).

14. UPS, l'UPS comprenant le circuit CC/CC selon les revendications 1 à 13.

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

Battery side          101          Bus side

Fig.17

Battery side          Bus side

Fig.18

EP 2 800 230 B1

Fig.19

Fig.20

38

Battery side   101   Bus side

BAT+

RLY 1-1   D1   T2   D2   RLY 1-2   Q3   Q4   D3   D4   C2

C1   L1   Q1   Q2

BAT-

T1   L2   RLY 2-1   RLY 2-2

Fig.21

Battery side   101   Bus side

BAT+

C1   RLY 1-1   D1   D2   RLY 1-2   Q3   Q4   D3   D4   C2

L1   Q1   Q2

BAT-

T1   L2   RLY 2

Fig.22

Battery side    Bus side

Fig.23

**EP 2 800 230 B1**

**Patent documents cited in the description**

- US 20080062724 A1